# EUROPÄISCHE PATENTANMELDUNG

(11) **EP 4 156 365 A1**
(43) Veröffentlichungstag der Anmeldung: **29.03.2023**
(21) Anmeldenummer: 22198557.5
(22) Anmeldetag: 28.09.2022
(51) Int. Cl.: H01M 10/0525, H01M 10/052, H01M 50/204, H01M 50/251, H01M 50/30

(54) **ELEKTROCHEMISCHES ENERGIESPEICHERELEMENT, BATTERIEMODUL UND BATTERIESPEICHERSYSTEM**

(30) Priorität: 28.09.2021 EP 21199309
(71) Anmelder: VARTA Microbattery GmbH, 73479 Ellwangen Jagst (DE)
(72) Erfinder: STÜBLER, Roman, 73466 Lauchheim (DE); KLOOS, Dieter, 74579 Fichtenau (DE); ROHR, Lukas, 86720 Nördlingen (DE); BUROW, Simon, 73447 Oberkochen (DE); FAASS, Andreas, 86756 Reimlingen (DE)
(74) Vertreter: Ostertag & Partner Patentanwälte mbB

(57) **Zusammenfassung**

Es wird ein elektrochemisches Energiespeicherelement, ein Batteriemodul mit einem Gehäuse und einer Mehrzahl von elektrochemischen Energiespeicherzellen, die im Inneren des Gehäuses angeordnet sind, oder ein Batteriespeichersystem mit mindestens zwei Batteriemodulen vorgeschlagen. Das elektrochemische Energiespeicherelement oder das Batteriemodul oder das Batteriespeichersystem zeichnet sich dadurch aus, dass das elektrochemische Energiespeicherelement oder das Batteriemodul oder das Batteriespeichersystem (100) mindestens ein Auffangmittel (130) für entweichende Rauchgase (210) umfasst. Bei dem Auffangmittel (130) kann es sich insbesondere um einen entfaltbaren Beutel handeln.

## Beschreibung

Die vorliegende Erfindung betrifft ein elektrochemisches Energiespeicherelement, ein Batteriemodul mit einer Mehrzahl von elektrochemischen Energiespeicherzellen und ein Batteriespeichersystem mit mindestens zwei Batteriemodulen.

### ANWENDUNGSGEBIET UND STAND DER TECHNIK

Unter einem Energiespeicherelement werden vorliegend sowohl eine einzelne, zur Speicherung von elektrischer Energie befähigte elektrochemische Zelle als auch eine Batterie mit mehreren elektrisch miteinander verschalteten, zur Speicherung von elektrischer Energie befähigten elektrochemischen Zellen verstanden.

Für Anwendungen im täglichen Umfeld oder im Haushalt, beispielsweise für Telefone, Haushaltsgeräte, Werkzeuge, elektrische Fahrräder, elektrische Roller oder ähnliches, werden in der Regel sogenannte Akkumulatoren verwendet, also wiederaufladbare Energiespeicherelemente. Hierbei kommen entweder einzelnen Energiespeicherzellen oder Batteriepacks/Batteriemodule, die mehrere Energiespeicherzellen umfassen, zum Einsatz.

Größere Batterien oder Batteriesysteme sind meist aus Batteriemodulen zusammengesetzt, die entweder einzelne Energiespeicherzellen oder mehrere, miteinander verschaltete Energiespeicherzellen umfassen können. Die Anzahl der von einem Batteriemodul umfassten Energiespeicherzellen hängt von den jeweils benötigten Strömen und Spannungen ab. Für Anwendungen im Bereich der Elektromobilität oder für große stationäre Energiespeicher werden in der Regel sehr große Ströme und hohe Spannungen und entsprechend viele Energiespeicherzellen benötigt.

Jede elektrochemische Energiespeicherzelle und damit jedes Energiespeicherelement im Sinne der vorliegenden Anmeldung umfasst mindestens eine positive und mindestens eine negative Elektrode, welche durch einen Separator voneinander getrennt sind. In elektrochemischen Energiespeicherzellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab. Die andere Teilreaktion läuft bei vergleichsweise höherem Redoxpotential an der positiven Elektrode ab. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem, der Elektrodenreaktion entsprechenden lonenstrom innerhalb der elektrochemischen Energiespeicherzelle. Dieser lonenstrom durchquert den Separator und wird durch einen ionenleitenden Elektrolyten ermöglicht.

In sekundären (wieder aufladbaren) elektrochemischen Energiespeicherzellen ist diese Entladereaktion reversibel, es besteht also die Möglichkeit, die bei der Entladung erfolgte Umwandlung chemischer Energie in elektrische Energie umzukehren.

Eine in Batteriemodulen oftmals verwendete elektrochemische Energiespeicherzelle ist die Lithium-lonen-Zelle. Diese umfasst Elektroden, die Lithiumionen reversibel aufnehmen und wieder abgeben können, sowie einen Lithiumionen enthaltenden Elektrolyten.

Energiespeicherelemente sind in der Regel mit einem Gehäuse ausgestattet. Hierbei sind prismatische Formen und sogenannte Rundzellen oder Knopfzellen mit einem zylindrischen Gehäuse weit verbreitet.

Batteriemodule haben oftmals ein kubisches Gehäuse mit einer rechteckigen Oberseite und einer rechteckigen Unterseite und vier rechteckigen Seitenwänden. Bei der Montage der Batteriemodule zu einer Batterie beziehungsweise zu einem Batteriespeichersystem ist es in der Regel vorgesehen, dass die Batteriemodule nebeneinander oder in gestapelter Form ausgerichtet werden, um dann entsprechend verschaltet werden zu können.

Bei dem Betrieb von elektrochemischen Zellen und insbesondere bei dem Betrieb eines Batteriemoduls entsteht Wärme. Sowohl bei der Energieabgabe als auch beim Laden erwärmen sich die Zellen. Eine Überhitzung kann zu Beeinträchtigungen und Schädigungen der elektrochemischen Zellen führen. Allerdings kann auch eine zu niedrige Temperatur beispielsweise den Ladevorgang negativ beeinflussen. Für einen sicheren und schonenden Betrieb des Batteriemoduls sollte daher ein gewisser Betriebstemperaturbereich eingehalten werden, so dass Maßnahmen zur Temperierung von Batteriemodulen und insbesondere zur Kühlung sinnvoll sind.

Es ist bekannt, Kühl- und Kältekreisläufe einzusetzen, um die sich im Betrieb erwärmenden elektrochemischen Zellen eines Batteriemoduls zu kühlen. Beispielsweise können Kühl- oder Kälteplatten verwendet werden, auf die die Batteriemodule mit ihrer Unterseite zur Wärmeabfuhr gepresst werden.

Andere Ansätze arbeiten mit der Einleitung eines flüssigen Kühlmediums direkt in das Batteriemodul. Aus der DE 10 2007 024 869 A ist beispielsweise ein Batteriemodul für Elektrogeräte bekannt, wobei ein Kühlmedium durch das Gehäuse des Moduls geleitet wird.

Weiterhin ist eine Luftkühlung von Batteriemodulen bekannt. So beschreibt die WO 2013/023847 A1 ein Batteriemodul insbesondere für Kraftfahrzeuge mit einem Batteriezellenstapel aus vorzugsweise prismatischen Batteriezellen, wobei sich zwischen den Batteriezellen Luftkanäle befinden. Hierdurch soll eine ausreichende Kühlung der Batteriezellen mittels eines Luftstroms ermöglicht werden.

Die DE 10 2014 201 165 A1 schlägt ein Batteriemodul vor, welches eine Anzahl von elektrisch miteinander verschalteten Batteriezellen umfasst. Die einzelnen Batteriezellen werden durch eine Luftströmung temperiert, die Kanäle durchströmt, die sich im Wesentlichen entlang der Batteriezellen erstrecken. Die Batteriezellen sind in einzelnen Batteriezellenfächern eines Batteriezellenhalters untergebracht. In den Seitenwänden der Batteriezellenfächer befinden sich die Kanäle, die von der Kühlluft durchströmt werden. Für eine ausreichende Kühlwirkung muss das Material des Batteriezellenhalters gute Wärmeleiteigenschaften aufweisen.

Die DE 20 2018 005 411 U1 beschreibt ein Batteriemodul mit zylindrischen Rundzellen ohne ein herkömmlicherweise verwendetes Gehäuse, wobei die Gehäusefunktionen von einer selbsttragenden Haltematrix aus Kunststoff übernommen werden. Einzelne Module können zu sogenannten Batteriepacks zusammengesteckt werden. Hierbei kann die flächige Distanz zwischen zwei Ebenen der zusammengesteckten Module als Luftkanal für eine Luftkühlung genutzt werden.

Neben einer guten Kühlung der Energiespeicherzellen in den Batteriemodulen eines aus mehreren Batteriemodulen zusammengesetzten Batteriespeichersystems besteht weiterhin im Allgemeinen die Anforderung, dass das Energiespeichersystem, je nach vorgesehener IP-Schutzklasse (IP - *International Protection*), hermetisch dicht sein sollte. Weiterhin sollte eine elektrische Isolationsfestigkeit gewährleistet sein. Im Hinblick auf die elektromagnetische Verträglichkeit sollten die parasitären Kapazitäten zwischen den Energiespeicherzellen und dem Gehäuse möglichst klein sein.

Diese Aspekte sind im Allgemeinen im Hinblick auf die Vorgaben zur Erfüllung von verschiedenen IP-Schutzklassen bei derartigen Systemen wichtig. In diesen Schutzklassen sind bestimmte Sicherheitsmaßnahmen und -vorgaben für bestimmte Geräte und Vorrichtungen definiert.

In dieser Hinsicht ist eine herkömmliche Luftkühlung bei Batteriespeichersystemen, bei der die Luft von einem integrierten Lüfter aus der Umwelt angesaugt und durch das oder die Batteriemodule geleitet und anschließend erwärmt wieder abgegeben wird, wegen der Forderung nach Wasser- und Staubdichtigkeit gegebenenfalls nicht geeignet.

Andere Lösungen zur Kühlung der Zellen, die mit wärmeleitenden Materialien und Strukturen die Verlustwärme von den Energiespeicherzellen zur Gehäuseoberfläche transportieren, sind in der Regel in der Umsetzung aufwendig und kostenintensiv. Weiterhin ist es im Allgemeinen bei der Verwendung von wärmeleitenden Materialien zweckmäßig, wenn die Abstände zwischen den Energiespeicherzellen und der kühlenden Gehäusewandung möglichst klein sind. Dies widerspricht jedoch der Forderung nach hoher Isolationsfestigkeit und geringen, parasitären Kapazitäten.

Eine Flüssigkeitskühlung ist mit anderen Schwierigkeiten verbunden, da die herkömmlichen wasserbasierten Kühlmittel in der Regel elektrisch leitfähig sind und daher mit Isolationsproblemen einhergehen. Insofern stellt eine Abführung von Wärme bei unter hohen Spannungen stehenden Teilen mittels einer Flüssigkeitskühlung in der Regel eine große Herausforderung dar, die mit aufwendigen technischen Maßnahmen verbunden ist.

Allgemein kann ein elektrochemisches Energiespeicherelement durch verschiedene Fehler in ein thermisches Ungleichgewicht (*thermal runaway*) geraten. Dabei kann das Element anfangen zu brennen und dabei große Mengen heiße, gegebenenfalls brennende Gase oder Funken auszustoßen. Bei einem Energiespeicherelement des Bautyps 21700 mit 5 Ah können beispielsweise bis zu 15 I heiße Gase austreten. Dies ist mit erheblichen Gefahren verbunden. Insbesondere sind die austretenden Gase für den Menschen giftig und können, je nach eingeatmeter Menge, toxisch sein. Weiterhin geht eine akute Brandgefahr durch Funken und Feuerschlag von derartigen Energiespeicherelementen, Modulen oder Systemen mit überhitzten Energiespeicherzellen aus.

Ein weiterer wichtiger Punkt ist der gegebenenfalls im System auftretende Druck, der entstehen kann, wenn einzelne Energiespeicherzellen beispielsweise überladen sind oder ein Kurzschluss auftritt. Die dabei entstehenden brennbaren Gase (Rauchgase) sollten im Sinne der Sicherheit und des Brandschutzes daher unter Kontrolle gehalten werden können.

Eine besondere Herausforderung im Hinblick auf eine Brandverhütung stellen vor allem großformatige Batteriemodule (etwa 100 Wh bis kWh) dar. Schadhafte Energiespeicherzellen bergen prinzipiell das Problem, thermisch so auffällig zu werden, dass heiße Gase aus ihnen austreten und sich entzünden können. Es sollte daher sichergestellt werden, dass kein Feuer aus dem System austreten kann und dass sich ein möglicher Brand innerhalb eines Batteriemoduls nicht auf benachbarte Batteriemodule ausdehnen kann.

### AUFGABE UND LÖSUNG

Herkömmliche Energiespeicherelemente, Batteriemodule und Batteriespeichersysteme bieten insbesondere im Hinblick auf diese angesprochenen Aspekte in der Regel keine befriedigenden Lösungen. Die vorliegende Erfindung stellt sich daher die Aufgabe, verbesserte Energiespeicherelemente, verbesserte Batteriemodule und verbesserte Batteriespeichersysteme bereitzustellen, die den genannten Anforderungen an leistungsfähige und sichere Elemente und Systeme bei gleichzeitig verhältnismäßig einfachem Aufbau Genüge tun.

Diese Aufgabe wird durch ein elektrochemisches Energiespeicherelement, ein Batteriemodul und ein Batteriespeichersystem gelöst, wie es sich aus Anspruch 1 ergibt. Bevorzugte Ausgestaltungen des Energiespeicherelements, des Batteriemoduls und des Batteriespeichersystems ergeben sich aus den abhängigen Ansprüchen.

Das erfindungsgemäße elektrochemisches Energiespeicherelement oder das erfindungsgemäße Batteriemodul oder das erfindungsgemäße Batteriespeichersystem zeichnet sich dadurch aus, dass das elektrochemische Energiespeicherelement oder das Batteriemodul oder das Batteriespeichersystem mindestens ein Auffangmittel für entweichende heiße Gase (Rauchgase) umfasst. Die Erfindung bietet damit die Möglichkeit, gegebenenfalls austretende heiße Gase, die bei einer Überhitzung eines Energiespeicherelements auftreten können, aufzufangen, sodass eine Brandgefahr erheblich reduziert werden kann und eine Freisetzung von potentiell toxischen Gasen vermieden wird. Für diese Wirkung ist es bereits ausreichend, wenn die freigesetzten Gase nur temporär eingefangen werden, da sich die Gase in dem Auffangmittel schnell abkühlen und deshalb auch dann die Brandgefahr erheblich reduziert wird, wenn die Gase nach und nach das Auffangmittel beispielsweise aufgrund von Undichtigkeiten des Auffangmittels oder durch Öffnungen im Auffangmittel wieder verlassen. Auch im Hinblick auf eine Giftigkeit der austretenden Gase ist es gegebenenfalls bereits ausreichend, wenn die Gase nur temporär aufgefangen werden, da die Toxizität der Gase sich in erster Linie auf die Menge der eingeatmeten Gase bezieht, sodass bei langsam das Auffangmittel wieder verlassenden Gasen diese Gefahr deutlich verringert wird.

Ein solches Auffangmittel kann sowohl für ein einzelnes Energiespeicherelement, wie beispielsweise eine zylindrische Rundzelle oder eine prismatische Zelle, oder für einen Pack mit mehreren einzelnen Energiespeicherelemente oder für ein Batteriemodul mit einem Gehäuse und einer Mehrzahl von elektrochemischen Energiespeicherzellen, die im Inneren des Gehäuses angeordnet sind, als auch für ein Batteriespeichersystem mit mindestens zwei Batteriemodulen eingesetzt werden. Hiervon umfasst sind also auch Batteriepacks, die beispielsweise für Haushaltsgeräte oder Werkzeuge oder elektrische Fahrzeuge wie Fahrräder oder Roller eingesetzt werden.

Das erfindungsgemäß vorgesehene Auffangmittel kann vor allem in einem im Prinzip geschlossenen System dazu dienen, eine Volumenforderung aufzunehmen, die insbesondere bei einer Rauchgasentwicklung auftritt.

Das Auffangmittel dient dabei zum dauerhaften oder temporären Einfangen von gegebenenfalls auftretenden Gasen oder auch von Funken oder Feuer. Damit kann die in einem Fehlerfall in die Umwelt austretende Gasmenge minimiert werden. Wenn das Auffangmittel so ausgebildet ist, dass es nicht dauerhaft für Gas undurchlässig ist, wird dennoch die Temperatur des an die Umgebung abgegebenen Gases reduziert, da sich das Gas in dem Auffangmittel abkühlt, bevor es gegebenenfalls langsam das Auffangmittel wieder verlässt. Weiterhin wird die Gefahr durch in die Umgebung freigesetzte Funken oder Flammen deutlich vermindert.

Insgesamt verhindert oder minimiert das Auffangmittel gemäß der Erfindung das Risiko eines Austretens von giftigen Gasen. Weiterhin werden das Risiko von Brandfällen insbesondere auch im Haushalt verringert und die Gefahr von Verbrennungen für den Menschen minimiert.

In einer besonders bevorzugten Ausgestaltung handelt es sich bei dem Auffangmittel um einen entfaltbaren Beutel. Der Beutel kann im Ausgangszustand beispielsweise ziehharmonikaartig gefaltet sein. Das Auffangmittel beziehungsweise der Beutel kann weiterhin eine schlauchförmige, also langgestreckte Form aufweisen.

Weiterhin ist es möglich, dass das Auffangmittel, abgesehen von der Einlassöffnung, über die die gegebenenfalls freigesetzten Rauchgase eingeleitet werden, eine oder mehrere weitere Öffnungen aufweist, da, wie bereits erwähnt, ein temporäres Zurückhalten der Rauchgase mittels des Auffangmittels ausreichend sein kann, um die gewünschten Effekte zu erzielen. So kann das Auffangmittel beispielsweise als Schlauch ausgebildet sein, der an einem Ende die Einlassöffnung für die Rauchgase aufweist und der am gegenüberliegenden Ende offen ist. In anderen Ausgestaltungen kann der Einlass für die Rauchgase beispielsweise in der Mitte der Schlauchlänge vorgesehen sein und beide Schlauchenden können eine Öffnung aufweisen. Im Fehlerfall werden die Rauchgase in dem Auffangmittel nur temporär zurückgehalten und können über dieses offene Ende oder diese offenen Enden das Auffangmittel wieder verlassen. Durch den zwischenzeitlichen Aufenthalt in dem Schlauch beziehungsweise dem Auffangmittel sind die Rauchgase bis zum Verlassen des Auffangmittels jedoch bereits soweit abgekühlt, dass die Brandgefahr deutlich reduziert ist.

Vorzugsweise ist das Auffangmittel so ausgebildet, dass es sich erst dann entfaltet, wenn sich ein entsprechend hoher Druck, wie er beim Abblasen von Energiespeicherzellen auftritt, bildet.

Insgesamt wird durch diese Maßnahme plötzlich auftretendem, volumenforderndem Rauchgas ein Raum zu dessen Entspannung geboten, sodass die gesundheitsschädlichen Gase nicht in die Umgebung abgegeben werden und die Brandgefahr reduziert wird.

In besonders bevorzugter Weise ist das Auffangmittel, insbesondere der Beutel, aus hitzebeständigem Material gebildet, sodass das Auffangmittel selbst nicht durch die heißen Rauchgase beschädigt wird und nicht selbst Feuer fängt. Als Material für einen hitzebeständigen Beutel eignet sich beispielsweise Nomex^{®} als ein von Dupont entwickeltes hitzebeständiges Material, das herkömmlicherweise auch für Schutzkleidung verwendet wird. Weiterhin kann beispielsweise Polytetrafluorethylen als Material für den Beutel eingesetzt werden. Auch ein Mineralfasergewebe wie Glasfaser mit und ohne Beschichtung, wie z.B. Silikon oder Teflon, kommt in Frage. Das Material kann gasdicht sein oder auch eine geringe Durchlässigkeit aufweisen, um Überdruck notfalls abblasen zu können. Möglich sind auch Ballons aus Teflonfolie oder Kapton. Für den Fall, dass mit relativ wenig heißen Gasen zu rechnen ist, insbesondere wenn die auftretenden heißen Gase durch später noch näher zu erläuternde Maßnahmen zuvor schon abgekühlt wurden, kann beispielsweise auch Polyester (PET), gegebenenfalls metallisch beschichtet, eingesetzt werden.

In besonders bevorzugten Ausgestaltungen des elektrochemischen Energiespeicherelements, des Batteriemoduls oder des Batteriespeichersystems zeichnen sich diese durch das folgende zusätzlichen Merkmal aus:
a. Das Auffangmittel ist in einem zusammengefalteten Zustand in ein Gehäuse des Energiespeicherelements oder in das Gehäuse des Batteriemoduls oder in ein Gehäuse des Batteriespeichersystems integriert.

Das Auffangmittel und insbesondere der entfaltbare Beutel kann demgemäß in besonders bevorzugter Weise in zusammengefalteter Form innerhalb des Gehäuses eines Energiespeicherelements, eines Batteriemoduls oder eines Batteriespeichersystems angeordnet sein, um ein besonders kompaktes System bereitzustellen. Im Fall eines Batteriespeichersystems, das aus mehreren Batteriemodulen aufgebaut ist, kann das Batteriespeichersystem gegebenenfalls ein Bodenteil und/oder ein Deckelteil umfassen, wobei es vorgesehen sein kann, dass das mindestens eine Auffangmittel in das Deckelteil oder, in besonders bevorzugten Ausgestaltungen, in das Bodenteil integriert ist.

Alternativ ist es möglich, dass der entfaltbare Beutel sich außerhalb des jeweiligen Gehäuses befindet und so an das Energiespeicherelement, Batteriemodul oder Batteriespeichersystem angeschlossen ist, dass gegebenenfalls austretende Gase in den entfaltbaren Beutel eingeleitet werden. Das Auffangmittel kann dabei beispielsweise mit einer Ladevorrichtung für einen Ackumulator, beispielswiese für ein einzelnes Energiespeicherelement, für einen Pack von Energiespeicherelementen (Batteriepack) oder ein Batteriemodul, derart gekoppelt sein, dass durch das Einsetzen des Akkumulators in die Ladevorrichtung der Anschluss des Auffangmittels bzw. des Beutels an den Akkumulator hergestellt wird, sodass bei einem während des Ladevorgangs auftretenden Fehlerfall gegebenenfalls austretenden heiße Gase und/oder Funken aufgefangen werden. Demgemäß umfasst die Erfindung auch eine Vorrichtung, insbesondere eine Ladevorrichtung für Akkumulatoren, beispielsweise für einzelnen Energiespeicherelemente oder Packs von Energiespeicherelementen oder Batteriemodule, die mit mindestens einem Auffangmittel für gegebenenfalls austretende heiße Gase ausgestattet sind.

Erfindungsgemäß kann beispielsweise ein Batteriepack so ausgebildet sein, dass das Auffangmittel in ein Gehäuse des Batteriepacks integriert ist und dabei bereits im zusammengefalteten Zustand die Energiespeicherzellen oder -elemente des Batteriepacks umhüllt. Alternativ kann das Auffangmittel an einen in dem Batteriepack oder dem Batteriemodul vorgesehenen Entgasungskanal gekoppelt und an dessen Ende im Übergang zur Umgebung angeschlossen werden.

In besonders bevorzugten Ausgestaltungen kann das Auffangmittel derart an dem Gehäuse eines Energiespeicherelements, eines Batteriemoduls oder beispielsweise an einem Deckelteil oder Bodenteil eines Batteriespeichersystems, das aus Batteriemodulen aufgebaut ist, angeordnet sein, dass das Auffangmittel im Fall einer Füllung mit Rauchgasen aus dem Gehäuse gedrückt und nach außen durch die Rauchgase aufgeblasen wird. Bei der Installation des Batteriemoduls oder gegebenenfalls eines Batteriespeichersystems sollte bei einer solchen Ausgestaltung darauf geachtet werden, dass der Durchtritt des Auffangmittels durch das Gehäuse nach außen nicht blockiert wird.

In besonders bevorzugten Ausgestaltungen zeichnet sich das erfindungsgemäße Energiespeicherelement, Batteriemodul oder Batteriespeichersystem durch das folgende zusätzliche Merkmal aus:
a. Das Auffangmittel ist mit einer Überdrucksicherung und/oder einem Druckausgleichselement kombiniert.

Bei der Überdrucksicherung handelt es sich vorzugsweise um eine an sich bekannte Sollbruchstelle, beispielsweise ein Berstkreuz oder eine andere Überdrucksicherung in dem Gehäuse einer Energiespeicherzelle oder um eine Sollbruchstelle in Form eines Überdruckventils in dem Gehäuse eines Batteriemoduls. Die Kombination des Auffangmittels mit einer solchen Sollbruchstelle hat den Vorteil, dass das Auffangmittel die durch die Sollbruchstelle im Fehlerfall entweichenden Gase direkt aufnehmen kann.

Besonders vorteilhaft ist die zusätzliche Kombination mit einem Druckausgleichselement, beispielsweise mit einem Ventil, das einen permanenten Druckausgleich im Sinne einer regulären Gehäuseentlüftung und gleichzeitig eine schnelle Entgasung im Fehlerfall erlaubt. Ein solches komplexes Ventil kann beispielsweise mit einem zentral angeordneten, wasserabweisenden Vliesstoff-Element für einen Luftaustausch und gegen ein Eindringen von Wasser und mit einem Schirmventil für die Entgasung im Notfall ausgebildet sein. Die Kombination eines solchen Ventils mit dem erfindungsgemäßen Auffangmittel bietet einen besonderen Schutz für den Fehlerfall, bei dem einzelnen Zellen/Elemente in ein thermisches Ungleichgewicht geraten.

Ein Überdruckventil bei einem Batteriemodul kann beispielsweise vor (im Rauchgaspfad) oder hinter dem Auffangmittel (Gehäusedurchführung) angeordnet sein.

Auch das Auffangmittel selbst, insbesondere der zusammengefaltete Beutel, kann bereits durch seine Faltung und Reibung des Materials schon eine gewisse Dichtung mit Überdrucksicherung darstellen.

In besonders bevorzugten Ausgestaltungen des erfindungsgemäßen Energiespeicherelementes, Batteriemoduls oder Batteriespeichersystems kann das erfindungsgemäß vorgesehene mindestens eine Auffangmittel mit weiteren Maßnahmen zur Reduzierung des Gefährdungsrisikos bei einem thermischen Entgleiten einzelner Energiespeicherelemente kombiniert werden. Demgemäß ist in bevorzugter Weise zusätzlich das folgende Merkmal vorgesehen:
a. Das Energiespeicherelement oder das Batteriemodul oder das Batteriespeichersystem umfasst mindestens ein Kühlmaterialdepot mit einem oder mehreren Kühlmaterialien.

Es ist besonders vorteilhaft, wenn das Auffangmittel räumlich mit dem Kühlmaterialdepot kombiniert wird. So können die Rauchgase in besonders vorteilhafter Weise vor dem Übertritt in das Auffangmittel beziehungsweise in den Beutel gekühlt werden. Alternativ oder zusätzlich zu dem Kühlmaterialdepot eignet sich zu diesem Zwecke auch ein integriertes Metallgitter, das im Pfad der Rauchgase angeordnet werden kann und eine Abkühlung der Rauchgase bewirkt.

Das Kühlmaterialdepot ist bevorzugt in einem Hohlraum angeordnet, durch welchen eventuell auftretende Brandgase (Rauchgase) hindurchströmen müssen. Bei dem Kühlmaterial handelt es sich um ein Material, das geeignet ist, diese Gase abzukühlen und gegebenenfalls kondensieren zu lassen. In Frage kommen hier beispielsweise Metallwolle oder auch ein Schüttgut wie z.B. Sand oder Quarzschaumgranulat. Das Kühlmaterialdepot umfasst dieses Material beispielsweise in einem gasdurchlässigen Säckchen (z.B. aus Nomex- oder Mineralfasergewebe wie Glas). Dieses Säckchen kann beispielsweise im Bereich eines Gaspfades oder Gaskanals des Batteriemoduls angeordnet und fixiert werden, z.B. mittels einer Klammer, Bügel, Kabelbinder oder Kleber. Somit kann sich ein Kühlmaterialdepot in einer dedizierten Kammer befinden, muss es aber nicht unbedingt.

Prinzipiell kann ein solches Kühlmaterialdepot innerhalb des Gehäuses eines einzelnen Energiespeicherelements vorgesehen sein. In besonders bevorzugter Weise jedoch wird ein solches Kühlmaterialdepot für ein Batteriemodul oder für ein Batteriespeichersystem mit zwei oder mehr Batteriemodulen eingesetzt. Wenn eine Energiespeicherzelle des Batteriemoduls in ein thermisches Ungleichgewicht gerät und heiße Gase ausstößt, können diese heißen Gas über das Kühlmaterialdepot derart abgekühlt werden, dass eine Ausbreitung (Propagation) der Hitze innerhalb des Batteriemoduls vermieden wird und weitergehende Schäden ausbleiben.

Im Hinblick auf die Kühlmaterialien des Kühlmaterialdepots ist vorzugsweise mindestens eines der folgenden zusätzlichen Merkmale vorgesehen:
a. Das Kühlmaterial des Kühlmaterialdepots ist Stahlwolle, insbesondere grobe Stahlwolle;
b. Das Kühlmaterial des Kühlmaterialdepots ist Aluminiumwolle, insbesondere grobe Aluminiumwolle;
c. Das Kühlmaterial des Kühlmaterialdepots ist Steinwolle, insbesondere locker gepackte Steinwolle;
d. Das Kühlmaterial des Kühlmaterialdepots ist Quarzschaumgranulat;
e. Das Kühlmaterial des Kühlmaterialdepots ist ein offenporiger Metallschaum;
f. Das Kühlmaterial des Kühlmaterialdepots ist ein Aluminiumkühlkörper.

In besonders bevorzugten Ausführungsformen können mehrere Materialien miteinander kombiniert werden. Besonders bevorzugt ist eine Kombination von Aluminiumwolle mit Quarzschaumgranulat.

Grobe Stahlwolle als Kühlmaterial ist besonders geeignet, da durch die grobe Struktur eine Entzündung der Wolle vermieden wird. Auch grobe Aluminiumwolle ist sehr geeignet und weist sogar eine bessere Wärmeleitfähigkeit als Stahl auf. Quarzschaumgranulat (*Pyrobubbles*) ist ein weiteres geeignetes Material für die Kühlmaterialdepots. Weiterhin eignen sich ineinander verschränkte Aluminiumkühlkörper und/oder offenporige Metallschäume. Steinwolle ist in diesem Zusammenhang ebenfalls geeignet und sollte vorzugsweise locker gepackt sein, um nur einen geringen Strömungswiderstand auszubilden.

Die Rauchgase, die im Fehlerfall bei einer Ausgasung von Energiespeicherelementen entstehen, bestehen in der Regel hauptsächlich aus hochsiedendem Elektrolyten. Durch eine ausreichende Größe des Kühlmaterialdepots können die Rauchgase derart wirkungsvoll abgekühlt werden, dass zumindest ein Teil des Elektrolytdampfes darin wieder kondensiert. Dies führt im Umfeld des betroffenen Elements oder des Batteriemoduls zu einer erheblich reduzieren Rauchbelastung im Falle eines solchen Fehlers. Zusätzlich werden infolge der Kühlung weniger brennbare Gase emittiert, was ebenfalls die Brandgefahr für die Umgebung weiter absenkt. Um diesen Effekt weiter zu optimieren, können vorzugsweise ein stark wärmeleitendes Material, wie zum Beispiel Aluminiumwolle, mit absorbierendem, feuerfesten Quarzschaumgranulat als Materialien für die Kühlmaterialdepots kombiniert werden.

In weiteren besonders bevorzugten Ausführungsformen im Hinblick auf das Kühlmaterialdepots wirkt das Kühlmaterialdepot als Staubfilter. Dies ist durch geeignete Materialauswahl und Dimensionierung von derartigen Kühlmaterialdepots möglich, wobei die Staubpartikel von dem Kühlmaterial, beispielsweise von der Steinwolle, herausgefiltert werden. Eine solche Staubfilterwirkung kann beispielsweise aus umwelttechnischen Gründen erforderlich sein. Ein solcher Staubfilter ist zugleich als Rauchgaskühler wirksam. Das Kühlmaterialdepot kann damit zwei Aufgaben gleichzeitig erfüllen.

In besonders vorteilhaften Ausführungsformen zeichnet sich das erfindungsgemäße Batteriemodul oder das erfindungsgemäße Batteriespeichersystem durch das folgende zusätzliche Merkmal aus:
a. Das Batteriemodul oder das Batteriespeichersystem ist mit mindestens einem Zugang für ein Löschmittel ausgestattet.

Dieser Zugang kann im Brandfall der Brandbekämpfung insbesondere durch die Feuerwehr dienen. Geeignete Löschmittel für eine derartige Brandbekämpfung sind dem Fachmann bekannt.

In besonders bevorzugter Weise ist das erfindungsgemäße Energiespeicherelement oder das erfindungsgemäße Batteriemodul oder das erfindungsgemäße Batteriespeichersystem durch mindestens eines der folgenden zusätzlichen Merkmale gekennzeichnet:
a. Das Energiespeicherelement oder das Batteriemodul oder das Batteriespeichersystem umfasst mindestens ein Überdruckventil.
b. Das Energiespeicherelement oder das Batteriemodul oder das Batteriespeichersystem umfasst mindestens ein Überdruckventil mit einem integrierten Metallgitter.
c. Das Energiespeicherelement oder das Batteriemodul oder das Batteriespeichersystem umfasst mindestens eine Berstmembran als Überdrucksicherung.

Insbesondere durch ein oder mehrere der vorgenannten Merkmale a. bis c. kann vermieden werden, dass in einem Fehlerfall eine Flamme aus dem Energiespeicherelement oder dem Batteriemodul oder dem Batteriespeichersystem austreten kann. Weiterhin kann durch derartige Maßnahmen vermieden werden, dass heiße Rauchgase innerhalb des Systems weitere Energiespeicherzellen in Brand setzen können.

Die erfindungsgemäßen Maßnahmen bieten dabei den besonderen Vorteil, dass die Rauchgase nicht nur definiert abgeleitet werden können, sondern auch wirkungsvoll abgekühlt werden, so dass sie beim Austritt aus dem System und in das Auffangmittel nicht mehr brennen.

In diesem Zusammenhang ist insbesondere ein gut wärmeleitendes Drahtgitter als abkühlende Maßnahme besonders vorteilhaft, da es eine Flamme derart abkühlen kann, dass sie am Drahtgitter quasi "stoppt". Ein Metallgitter, beispielsweise in Kombination mit einem Überdruckventil, stellt eine thermische Barriere für die Rauchgase dar, da das Metallgitter der Verbrennung lokal große Mengen an Wärme entzieht, so dass es an dieser Barriere zu einem Erliegen der Verbrennung kommt. Gleichzeitig kann die Barriere, also das Metallgitter, nahezu ungehindert gasdurchlässig sein. Es muss nur sichergestellt sein, dass genügend Kontaktfläche und Wärmeableitung und/oder Wärmekapazität vorhanden sind, um den Verbrennungsprozess an dieser Stelle zu stoppen. Insbesondere bei dem erfindungsgemäßen Batteriemodul oder bei dem erfindungsgemäßen Batteriespeichersystem ist es daher in bevorzugten Ausgestaltungen vorgesehen, derartige thermische Barrieren in den Pfad der gegebenenfalls auftretenden heißen Brandgase zu legen, so dass im Fehlerfall keine Flammen austreten können und so auf einfache und kostengünstige Weise die Sicherheit erhöht wird.

Wenn die Gasdurchtrittsöffnungen selbst als Gitterstruktur ausgebildet sind, kann bereits hierdurch eine Abkühlung der durchtretenden Gase, insbesondere im Fall von entweichenden Rauchgasen, auftreten, was einen besonderen Vorteil im Hinblick auf die Sicherheit bietet.

Das erfindungsgemäße Batteriemodul kann als *standalone*-Batteriemodul, beispielsweise als hermetisch dichtes *standalone*-Batteriemodul, eingesetzt werden, oder das erfindungsgemäße Batteriemodul ist zum Aufbau eines Batteriespeichersystems vorgesehen.

Durch das oder die Kühlmaterialdepot(s) in dem Batteriemodul wird erreicht, dass gegebenenfalls freigesetzte heiße Gase sehr schnell abgekühlt werden, sodass eine Propagation von Überhitzungen unter den Energiespeicherzellen innerhalb eines Batteriemoduls verhindert wird. Insgesamt werden bei einem solchen Batteriemodul daher nur sehr wenige Zellen thermisch auffällig. Der Schutz vor einer Propagation von Überhitzungen kann durch die weiteren beschriebenen Maßnahmen noch weiter verbessert werden.

Das erfindungsgemäße Batteriemodul kann mindestens eine Kontaktiereinrichtung zur Verbindung mit einem anderen Batteriemodul eines Batteriespeichersystems und/oder gegebenenfalls mit einem Bodenteil und/oder einem Deckelteil eines Batteriespeichersystems aufweisen.

Die mindestens eine Kontaktiereinrichtung umfasst zweckmäßigerweise mindestens einen, vorzugsweise mehrere Anschlüsse für Leistung und/oder Datensignale, sodass über die Kontaktiereinrichtungen eine elektrische Verbindung zwischen den einzelnen Modulen eines Systems hergestellt werden kann.

In besonders bevorzugten Ausführungsformen ist die mindestens eine Kontaktiereinrichtung von einer umlaufenden mechanischen Führung umgeben. Unter einer solchen mechanischen Führung ist insbesondere ein umlaufender Rahmen, beispielsweise in Form eines in rechtem Winkel abragenden Stegs, zu verstehen, der die Kontaktiereinrichtung umgrenzt.

Die Kontaktiereinrichtungen der Batteriemodule befinden sich vorzugsweise außenseitig und sind also von der Außenseite des jeweiligen Gehäuses der Batteriemodule zugänglich. Dies erleichtert die Montage eines Batteriesystems, indem die einzelnen Batteriemodule über die leicht zugänglichen Kontaktiereinrichtungen, die die Anschlüsse für Leistung und/oder Datensignale bereitstellen, miteinander oder gegebenenfalls mit einem Deckel- oder Bodenteil des Systems gekoppelt und elektrisch verbunden werden können. Vorzugweise können auf diese Weise benachbarte Batteriemodule innerhalb eines Batteriespeichersystems über die Kontaktiereinrichtungen elektrisch miteinander verbunden werden.

Weiterhin ist es besonders bevorzugt, dass im Bereich der Kontaktiereinrichtung innerhalb der umlaufenden mechanischen Führung mindestens eine Gasdurchtrittsöffnung vorgesehen ist. Durch solche Gasdurchtrittsöffnungen kann in besonders vorteilhafter Weise ein Gasaustauschkontakt zwischen den einzelnen Modulen eines Batteriespeichersystems hergestellt werden, wie es im Folgenden noch eingehender erläutert werden wird.

Bei dem Batteriespeichersystem, das von der Erfindung umfasst wird, sind benachbarte Batteriemodule innerhalb des Systems vorzugsweise über die bereits erwähnten Kontaktiereinrichtungen elektrisch miteinander verbunden. Erfindungsgemäß umfasst dieses Batteriespeichersystem mindestens ein Auffangmittel, vorzugsweise in Form eines entfaltbaren Beutels. Das Auffangmittel kann beispielsweise im Bodenteil des Batteriespeichersystems angeordnet sein.

Auch wenn ein Batteriesystem zu gut wie möglich im Hinblick auf Spezifikation, Design, Verifikation und Prüfung im Hinblick auf die Sicherheit optimiert ist, bleibt immer ein gewisses Restrisiko einer Brandgefahr. Das erfindungsgemäße Batteriespeichersystem ist in der Lage, das Restrisiko einer Brandgefahr, die mit dem Freisetzen von Rauchgasen bei abblasenden überhitzen Energiespeicherzellen verbunden ist, zu minimieren.

Neben dem mindestens einen Auffangmittel sind in besonders bevorzugter Weise ein oder mehrere Kühlmaterialdepots vorgesehen, die an verschiedenen Stellen in dem Batteriespeichersystem angeordnet sein können. In besonders bevorzugter Weise ist das Kühlmaterialdepot im Bereich eines Überdruckventils, beispielsweise im Bereich einer Berstmembran, an einem äußeren Gehäuse des Systems oder in einem Gehäuse eines der Batteriemodule angeordnet. In dieser Ausgestaltung können die sich möglicherweise entwickelnden Rauchgase zunächst im Bereich des Kühlmaterialdepots abkühlen, bevor sie über das Überdruckventil beziehungsweise die Berstmembran freigesetzt werden und in dem Auffangmittel aufgenommen werden.

In bevorzugten Ausführungsformen ist das Kühlmaterialdepot in einem Bodenteil des Batteriespeichersystems in räumlicher Nähe zu einem erfindungsgemäß vorgesehenen Auffangmittel angeordnet.

In besonders bevorzugter Weise weisen die Batteriemodule die bereits erwähnten Gasdurchtrittsöffnungen auf, über die die Batteriemodule in Gasaustauschkontakt miteinander stehen. Die Batteriemodule sind damit gewissermaßen pneumatisch gekoppelt und weisen eine durchlässige Verbindung der Innenräume der Systemkomponenten (Batteriemodule, gegebenenfalls Boden- und/oder Deckelteil) auf, wobei gleichzeitig die nach diversen IP-Klassen geforderte Dichtigkeit realisiert werden kann.

Diese Gasdurchtrittsöffnungen können sich in besonders bevorzugter Weise im Bereich der Kontaktiereinrichtungen befinden, insbesondere innerhalb einer umlaufenden mechanischen Führung (Rahmen), die die Kontaktiereinrichtungen umgrenzen. Prinzipiell können sich entsprechende Gasdurchtrittsöffnungen auch an anderer Stelle befinden. Der hierdurch ermöglichte Gasaustausch zwischen den Modulen kann einerseits einer Luftkühlung oder einer Kühlung mit einem anderen Medium dienen. Andererseits wird hierdurch ein Rauchgaspfad bereitgestellt werden, über den gegebenenfalls gebildete Rauchgase abgeleitet werden können, bevor sie in das oder die erfindungsgemäß vorgesehenen Auffangmittel eingeleitet werden.

In bevorzugten Ausgestaltungen des erfindungsgemäßen Batteriespeichersystems zeichnet sich das Batteriespeichersystem durch mindestens eines der folgenden zusätzlichen Merkmale aus:
a. Jedes Batteriemodul weist ein quaderförmiges Gehäuse auf.
b. Auf mindestens zwei gegenüberliegenden Seiten des Gehäuses, insbesondere eines quaderförmigen Gehäuses, ist jeweils eine Kontaktiereinrichtung angeordnet.
c. Die Batteriemodule sind gestapelt oder gereiht.

Vorzugsweise sind die vorgenannten Merkmale a. und b. oder a. und b. und c. in Kombination verwirklicht.

Die Ausgestaltung der Batteriemodule mit einem quaderförmigen Gehäuse vereinfacht die Verbindung und insbesondere die Stapelung oder Reihung der Batteriemodule zu einem Batteriespeichersystem erheblich. Im Allgemeinen sind quaderförmige Gehäuse für derartige Batteriemodule auch bereits bei herkömmlichen Systemen bekannt. Diese Quaderform kann auch für das erfindungsgemäße System genutzt werden.

Besonders vorteilhaft ist es, wenn die Kontaktiereinrichtungen auf zwei sich gegenüberliegenden Seiten des quaderförmigen Gehäuses angeordnet sind. In diesem Fall können die einzelnen Batteriemodule in besonders einfacher Weise beispielsweise aufeinandergestapelt werden.

Wie auch bei einem herkömmlichen Batteriespeichersystem können die einzelnen Batteriemodule des Systems beispielsweise gestapelt und/oder aneinandergereiht werden. Die Kontaktiereinrichtungen der einzelnen Batteriemodule sind so ausgebildet, dass die benachbarten Batteriemodule darüber miteinander verschaltet werden können. Hierbei sind an sich bekannte Anschlüsse für Leistung und/oder für Datensignale vorgesehen, vorzugsweise für Leistung und für Datensignale.

Insbesondere im Fall eines gestapelten Systems können ein Bodenteil und ein Deckelteil (Oberteil) vorgesehen sein. Die Anschlüsse des Stapels können beispielsweise am oberen Deckelteil zugänglich gemacht werden, während das Bodenteil beispielsweise nur die Verbindungstechnik enthält. Prinzipiell ist jedoch die Wahl der Stelle der Anschlüsse für Leistung und Datensignale je nach den Gegebenheiten und Anforderungen frei wählbar und ist beispielsweise auch im Bodenteil möglich. Bei gereihten Systemen können entsprechende seitliche Teile vorgesehen sein.

In anderen Ausführungsformen können die Kontaktiereinrichtungen auf verschiedenen Seiten des Gehäuses, jedoch nicht auf einander gegenüberliegenden Seiten des Gehäuses, vorgesehen sein, beispielsweise auf Seiten, die in einem rechten Winkel zusammenlaufen. Diese Anordnung der Kontaktiereinrichtungen ermöglicht andere Geometrien beim Verbinden der einzelnen Batteriemodule miteinander, beispielsweise in einer komplexen Blockform oder Ähnlichem.

In besonders bevorzugter Weise handelt es sich bei den Kontaktiereinrichtungen der Batteriemodule um Steckverbinder, die vor allem als Verbindungselemente für Leistung und/oder Datensignale dienen.

Vorteilhafterweise sind die jeweiligen Kontaktiereinrichtungen, die zum Ineinanderstecken vorgesehen sind, komplementär zueinander ausgebildet. Zum Beispiel sind die Steckelemente der Kontaktiereinrichtung an einer Seite eines ersten Batteriemoduls weiblich und die Steckelemente der Kontaktiereinrichtung auf derjenigen Seite eines benachbarten zweiten Batteriemoduls, das mit dem ersten Batteriemodul verbunden werden soll, männlich.

Weiterhin ist das erfindungsgemäße Batteriespeichersystem und die erfindungsgemäßen Batteriemodule in bevorzugter Weise dadurch gekennzeichnet, dass die Kontaktiereinrichtungen jeweils von einer umlaufenden mechanischen Führung umgeben sind. Die umlaufende mechanische Führung ist insbesondere als umlaufender Rahmen ausgebildet, der beispielsweise durch einen in einem rechten Winkel abragenden, umlaufenden Stegs realisiert sein kann, der über seine Längskante an der Fläche des Gehäuses angebracht ist.

Insbesondere zum Schutz der Steckverbindungen beziehungsweise der Steckelemente weisen die Kontaktiereinrichtungen diese umlaufende mechanische Führung auf. Diese mechanische Führung bzw. der Rahmen ist zweckmäßigerweise formstabil und schützt die Verbindungen vor mechanischen Beschädigungen, eintretendem Staub oder Wasser oder ähnlichem.

In ganz besonders bevorzugten Ausführungsformen ist im Bereich der Kontaktiereinrichtungen innerhalb der umlaufenden mechanischen Führung beziehungsweise innerhalb des jeweiligen, die Kontaktiereinrichtungen begrenzenden Rahmens mindestens eine Gasdurchtrittsöffnung vorgesehen.

Die bereits erwähnten Gasdurchtrittsöffnungen stellen durch das gesamte Batteriespeichersystem hindurch über die verschiedenen Batteriemodule hinweg einen Pfad für Kühlluft oder ein anderes Kühlmedium bereit. Zugleich oder gegebenenfalls alternativ kann der durch die Gasdurchtrittsöffnungen bereitgestellte Pfad mit besonderem Vorteil auch für die Verteilung und Ableitung von Rauchgasen, die gegebenenfalls auftreten, genutzt werden. In dieser Ausführungsform werden die in der Regel ohnehin vorhandenen Kontaktiereinrichtungen, die zum Verschalten der einzelnen Batteriemodule vorgesehen sind, für die Integration von Gasdurchtrittsöffnungen zwischen den einzelnen Batteriemodulen genutzt.

Allgemein ist unter einer Gasdurchtrittsöffnung in diesem Zusammenhang eine Öffnung oder eine Durchbrechung in der Wandung des Batteriemoduls zu verstehen, die einen Gasdurchtritt erlaubt. Die Gasdurchtrittsöffnungen befinden sich dabei vorzugsweise innerhalb der umlaufenden mechanischen Führung (Rahmen) im Bereich der Kontaktiereinrichtungen. Die Gasdurchtrittsöffnungen können beispielsweise eine runde oder kreisrunde Form aufweisen. In anderen Ausgestaltungen können sie im Prinzip jede andere Form aufweisen, beispielsweise Schlitze oder ähnliches. In bevorzugten Ausgestaltungen können die Gasdurchtrittsöffnungen auch von einer Gitterstruktur gebildet werden.

Da sich die Gasdurchtrittsöffnungen in dieser Ausführungsform innerhalb der umlaufenden mechanischen Führungen der Kontaktiereinrichtungen befinden, wird durch die Verbindung der benachbarten Batteriemodule über die Kontaktiereinrichtungen gleichzeitig der Gasdurchtritt zwischen den benachbarten Batteriemodulen des Systems ermöglicht. Das erfindungsgemäße Batteriespeichersystem erlaubt damit in sehr vorteilhafter Weise eine Führung von Kühlluft oder eines anderen Kühlmediums und/oder gegebenenfalls von Rauchgasen, ohne dass bei der Montage zusätzliche, aufwendige Maßnahmen erforderlich wären. Diese Maßnahmen erleichtern damit zum einen die Kühlung von derartigen Batteriespeichersystemen und ermöglicht zum anderen eine effektives Rauchgasmanagement vor allem durch das erfindungsgemäße Auffangen von Rauchgasen, um so möglicherweise auftretende Batteriebrände zu verhindern oder in ihren Auswirkungen zu begrenzen.

Für die Herstellung eines Batteriespeichersystems in dieser Ausführungsform können beispielsweise an sich bekannte Batteriemodule, beispielweise Batteriemodule mit einem quaderförmigen Gehäuse, im Bereich der mechanischen Führungen von vorhandenen Kontaktiereinrichtungen derart angepasst werden, dass Gasdurchtrittsöffnungen innerhalb der mechanischen Führungen der Kontaktiereinrichtungen bereitgestellt werden, so dass die Batteriemodule für einen Gasdurchtritt zwischen benachbarten Batteriemodulen des Systems im Sinne dieser bevorzugten Ausgestaltung der Erfindung eingerichtet werden.

In besonders bevorzugter Weise sind innerhalb der mechanischen Führungen der Kontaktiereinrichtungen jeweils zwei oder mehr Gasdurchtrittsöffnungen vorgesehen. Je nach der übrigen Ausgestaltung der Kontaktiereinrichtungen und beispielsweise abhängig von der Anzahl der einzelnen Steckelemente und deren Größe innerhalb der umlaufenden mechanischen Führung der Kontaktiereinrichtungen kann es besonders vorteilhaft sein, zwei Gasdurchtrittsöffnungen pro Kontaktiereinrichtung vorzusehen, die sich beispielsweise diametral einander gegenüber in den Eckbereichen der Kontaktiereinrichtungen befinden. Gleichwohl ist es auch möglich, nur eine Gasdurchtrittsöffnung pro Kontaktiereinrichtung oder gegebenenfalls mehr als zwei Gasdurchtrittsöffnungen vorzusehen.

Wenn zwei Kontaktiereinrichtungen von benachbarten Batteriemodulen im System miteinander verbunden werden, kann es zweckmäßig sein, dass die jeweiligen Gasdurchtrittsöffnungen genau einander gegenüberliegen, um einen optimalen Gasfluss zu ermöglichen. Gleichfalls ist es auch möglich, dass die jeweiligen Gasdurchtrittsöffnungen nicht genau einander gegenüberliegen, da auch in diesem Fall ein ausreichend guter Gasfluss möglich sein kann.

Weiterhin kann eine Vielzahl von relativ kleinen Gasdurchtrittsöffnungen vorteilhaft sein, beispielsweise in Form eines Drahtgitters oder Ähnlichem. Insbesondere eine Gitterstruktur als Gasdurchtrittsöffnung kann besonderer Vorteile im Hinblick auf eine Flammenlöschung bei einem möglichen Brandfall bieten.

Die gegebenenfalls vorgesehenen Kühlmaterialdepots können mit besonderem Vorteil im Bereich der Gasdurchtrittsöffnungen angeordnet werden, wo sie in besonders effektiver Weise einen Schutz vor den Auswirkungen des Ausgasens einer oder mehrerer der Energiespeicherzellen bieten. Dabei ist es auch möglich, durchtretende Rauchgase durch eine Vielzahl kleiner Lüftungsöffnungen, beispielsweise in Form einer Gitterstruktur, die die Gasdurchtrittsöffnungen bildet, bereits so abzukühlen, dass ein löschender Effekt für gegebenenfalls auftretende Flammen eintritt. In diesem Zusammenhang eignen sich beispielsweise auch Schlitzstrukturen für die Gasdurchtrittsöffnungen. Besonders geeignet in diesem Zusammenhang ist eine Kombination von Kühlmaterialdepots und Lüftungsgittern beziehungsweise einer Matrix aus vielen kleinen Lüftungsöffnungen, die die Gasdurchtrittsöffnungen zwischen den Batteriemodulen bildet.

Weiterhin zeichnet sich das erfindungsgemäße Batteriespeichersystem in bevorzugten Ausführungsformen durch mindestens eines der folgenden zusätzlichen Merkmale aus:
a. Die mechanischen Führungen der Kontaktiereinrichtungen umgrenzen einen Bereich der jeweiligen Seitenfläche des Gehäuses von bis zu 70% der Gesamtfläche der Seitenfläche.
b. Die Gasdurchtrittsöffnungen einer Kontaktiereinrichtung umfassen eine Fläche von bis zu 30% der Gesamtfläche der jeweiligen Seite des Gehäuses.

Die Größe beziehungsweise die Abmessungen der mechanischen Führungen der Kontaktiereinrichtungen im Hinblick auf die Seitenfläche des Gehäuses gibt allgemein eine obere Begrenzung für die maximal möglichen Flächen der Gasdurchtrittsöffnungen vor, da sich die Gasdurchtrittsöffnungen in dieser Ausführungsform innerhalb der mechanischen Führungen befinden. Die mechanischen Führungen können dabei zumindest theoretisch maximal den gesamten Querschnitt der jeweiligen Seite des Gehäuses des Batteriemoduls umfassen und bieten somit eine maximale Fläche für den Gasdurchtritt, wobei dabei auch der Flächenbedarf für die Anbringung der einzelnen Verbindungselemente der Kontaktiereinrichtung berücksichtigt werden muss.

Je nach den Erfordernissen insbesondere im Hinblick auf die Kühlung und das Strömungsverhalten bieten die hier beschriebenen Maßnahmen verschiedene Anpassungsmöglichkeiten für die Gasdurchtrittsöffnungen. Besonders bevorzugt ist es beispielsweise, dass die Gasdurchtrittsöffnungen einer Kontaktiereinrichtung eine Fläche von maximal 30% der Gesamtfläche der jeweiligen Seite des Modulgehäuses umfassen. Hierbei wird auf der einen Seite eine ausreichende Fläche für den Gasdurchtritt, vor allem für Kühlzwecke, bereitgestellt. Auf der anderen Seite wird eine Schwächung der Stabilität der jeweiligen Seite des Gehäuses durch die Durchbrechungen der Gehäusewandung, die für die Gasdurchtrittsöffnungen erforderlich sind, in einem vertretbaren Rahmen gehalten.

In besonders bevorzugter Weise zeichnet sich das Batteriespeichersystem durch das folgende zusätzliche Merkmal aus:
a. Die mechanischen Führungen der Kontaktiereinrichtungen, über die benachbarte Batteriemodule miteinander verbunden sind, greifen formschlüssig ineinander.

Durch einen formschlüssigen Eingriff der mechanischen Führungen der Kontaktiereinrichtungen von benachbarten Batteriemodulen ist ein Zusammenstecken der Batteriemodule in besonders einfacher Weise möglich. Durch eine entsprechende Ausbildung der mechanischen Führungen wird zugleich verhindert, dass nicht zueinander passende Kontaktiereinrichtungen miteinander verbunden werden. Sie können also nur ineinandergeschoben werden, wenn sich die passenden Verbinder einander gegenüber befinden, beispielsweise eine Kontaktiereinrichtung auf der Rückseite eines Moduls und eine Kontaktiereinrichtung auf der Vorderseite eines benachbarten Moduls. Hierfür ist zweckmäßigerweise eine der beiden mechanischen Führungen kleiner gestaltet als das Gegenstück, so dass das Ineinanderschieben mechanisch sehr einfach möglich ist. Eine derartige Ausgestaltung der mechanischen Führungen erfüllt damit auch die Funktion eines Schutzes gegen falsches Stecken.

In besonders bevorzugter Weise zeichnet sich das Batteriespeichersystem weiterhin durch das folgende zusätzliche Merkmal aus:
a. Die mechanischen Führungen sind zur Abdichtung der Kontaktiereinrichtungen eingerichtet.

Durch die Abdichtung der Kontaktiereinrichtungen wird beispielsweise eine Dichtung gegenüber Gas, Feuchtigkeit und/oder Staub gewährleistet. Die Abdichtung stellt darüber hinaus auch den sicher geführten Gasdurchtritt sicher, so dass insbesondere eine Zwangskühlung bei gleichzeitig gegebener Dichtigkeit ermöglicht wird, die beispielsweise auch die Vorgaben nach verschiedenen IP-Schutzklassen erfüllen kann.

Die Dichtigkeit kann beispielsweise bereits durch die bevorzugte formschlüssige Verbindung bei den mechanischen Führungen gewährleistet werden.

In besonders bevorzugten Ausführungsformen zeichnet sich das Batteriespeichersystem insbesondere im Hinblick auf die Abdichtung durch mindestens eines der folgenden zusätzlichen Merkmale aus:
a. Die mechanischen Führungen umfassen zumindest teilweise eine umlaufende Dichtlippe.
b. Die mechanischen Führungen umfassen zumindest teilweise eine Dichtungsmasse.

Durch eine beispielsweise umlaufende Dichtlippe, beispielsweise aus einem elastischen Kunststoff oder Gummi, und/oder durch eine übliche Dichtungsmasse im Bereich der mechanischen Führungen kann eine sehr sichere Abdichtung erreicht werden.

Je nach zu realisierender IP-Schutzklasse bei dem Batteriespeichersystem kann auch eine hermetische Dichtigkeit gefordert sein, die insbesondere durch eine Dichtlippe oder eine Dichtungsmasse erreicht werden kann. Sofern keine hermetische Dichtigkeit gefordert ist, kann unter Umständen bereits eine formschlüssige Verbindung für die Dichtigkeit ausreichend sein. Je nach Anwendung kann beispielsweise ein Schutz gegen Eindringen von Wasser genügen.

Bei einer Stapelung der Batteriemodule zur Ausbildung des Batteriespeichersystems kann bereits alleine das Gewicht der Batteriemodule ausreichend sein, um einen derartigen mechanischen Druck für die Abdichtung durch die formschlüssige Verbindung und/oder gegebenenfalls für die Abdichtung mittels Gummilippen, Dichtungsmassen oder Ähnlichem zu erreichen, der eine weitere mechanische Fixierung, beispielsweise mittels Schrauben, Klammern oder Haltefedern, zur Sicherstellung einer Dichtigkeit überflüssig macht. Hierdurch wird auf der einen Seite die Montage weiter vereinfacht, da ein zusätzlicher Fixierungsschritt nicht erforderlich ist. Zum anderen wird auch eine weitere Fehlerquelle bei der Montage durch den Verzicht auf einen zusätzlichen Fixierungsschritt vermieden.

In weiteren bevorzugten Ausgestaltungen zeichnet sich das erfindungsgemäße Batteriespeichersystem oder das erfindungsgemäße Batteriemodul durch mindestens eines der folgenden zusätzlichen Merkmale aus:
a. Das Batteriespeichersystem oder das Batteriemodul ist für eine Kühlung mit einem gasförmigen Medium, insbesondere mit Luft, eingerichtet.
b. Das Batteriespeichersystem oder das Batteriemodul ist mit Mitteln zur Luftkühlung ausgestattet.
c. Das Batteriespeichersystem oder das Batteriemodul weist mindestens einen, vorzugsweise mehrere Lüfter auf.
d. Das Batteriespeichersystem oder das Batteriemodul weist mindestens eine aktive Kühleinrichtung, beispielsweise ein Peltierelement und/oder einen Absorber-Kühler und/oder einen Kompressor-Kühler, auf.
e. Das Batteriespeichersystem oder das Batteriemodul weist mindestens einen Anschluss für eine externe Kühlluftquelle auf.
f. Das oder die Batteriemodul(e) weist/weisen interne Strukturen zur Luftführung und/oder -leitung auf, wobei vorzugsweise die internen Strukturen zur Luftführung und/oder -leitung für eine umlaufende Luftführung eingerichtet sind.
g. Das Batteriespeichersystem oder das Batteriemodul ist für eine zyklische Umkehrung der Kühlungsluftrichtung eingerichtet.
h. Das Batteriespeichersystem oder das Batteriemodul ist mit wärmeleitenden Einrichtungen ausgestattet.
i. Das Batteriespeichersystem oder das Batteriemodul ist mit einem Wärmetauscher ausgestattet.
j. Das Batteriespeichersystem oder das Batteriemodul ist mit mindestens einem Kompressor ausgestattet.
k. Die Energiespeicherzellen sind zylindrische Rundzellen.

Es können ein oder mehrere der vorgenannten Merkmale a. bis k. in Kombination verwirklicht sein.

Besonders bevorzugt ist die Verwendung von zylindrischen Rundzellen für die Batteriemodule. Bei elektrochemischen Energiespeicherzellen und insbesondere auch bei Lithiumionen-Zellen sind verschiedene Bauformen bekannt. Neben prismatischen Formen sind Knopfzellen und zylindrische Rundzellen weit verbreitet, wobei sowohl Knopfzellen als auch Rundzellen eine kreisförmige Grundfläche aufweisen. Zylindrische Rundzellen unterscheiden sich von Knopfzellen darin, dass ihre Höhe größer als der Durchmesser der kreisförmigen Grundfläche ist. Bei der Verwendung von solchen zylindrischen Rundzellen in einem Batteriemodul können die zylindrischen Rundzellen beispielsweise in Form von Batterieblöcken angeordnet sein, in denen die Rundzellen senkrecht nebeneinander in einer Fläche angeordnet werden und beispielsweise von einem Zellhalter aus Kunststoff gehalten werden. Die Verwendung von zylindrischen Rundzellen bei derartigen Batteriemodulen hat den besonderen Vorteil, dass durch die Geometrie der Rundzellen zwischen den einzelnen Zellen zwangsläufig Hohlräume entstehen, die für eine Kühlung und insbesondere für eine Luftkühlung sehr vorteilhaft sind.

Die Maßnahmen für eine Kühlung der Energiespeicherzellen innerhalb des jeweiligen Batteriemoduls können im Prinzip mit an sich bekannten Methoden erfolgen. Besonders bevorzugt ist eine Luftkühlung der Energiespeicherzellen, wobei sich die Luft über die Gasdurchtrittsöffnungen zwischen den einzelnen Batteriemodulen verteilen kann. Zum Antrieb der Kühlluft können Lüfter (Ventilatoren) oder andere aktive Kühleinrichtungen, die dem Fachmann an sich bekannt sind, genutzt werden. Besonders bevorzugt ist es, wenn innerhalb der Batteriemodule weitere interne Strukturen, beispielsweise Lenkbleche oder Ähnliches, vorgesehen sind, die eine optimale Luftführung und/oder -leitung ermöglichen.

Alternativ zu einem Lüfter oder Ventilator kann für den Lufttransport auch ein Kompressor verwendet werden, der das System beispielsweise bei Atmosphärenüberdruck betreiben kann. In diesem Fall nimmt die Luft unter Druck mehr Wärme auf. Dabei steht das System unter Druck, so dass dem Eindringen von Feuchtigkeit und/oder Staub entgegengewirkt wird. Eine Expansion der komprimierten Luft kann dabei für weitere Abkühlung sorgen (analog einer Kältemaschine). Insgesamt bietet also ein Kompressor verschiedene Vorteile gegenüber einem Lüfter.

Das erfindungsgemäße Batteriespeichersystem kann für eine Kühlmittelführung, insbesondere Kühlluftführung, in einer Richtung, beispielsweise von oben nach unten oder von unten nach oben bei einer Stapelung der Batteriemodule, oder von rechts nach links oder von links nach rechts bei einer Reihung der Batteriemodule, vorgesehen sein. Es kann jedoch auch eine Kreisführung des Kühlmittels und insbesondere der Kühlluft vorgesehen sein, wobei abgegrenzte Kammern innerhalb der Batteriemodule eine umlaufende Luftführung erleichtern. In bevorzugten Ausgestaltungen weisen die einzelnen Batteriemodule eine oder mehrere Abtrennungen (Trennwände) auf, die die Batteriemodule in zwei oder gegebenenfalls mehr separate Kammern unterteilen. Mit dieser Ausführungsform ist mit besonderem Vorteil eine umlaufende Kühlmittelführung und insbesondere eine umlaufende Kühlluftführung möglich. Dies kann sowohl in einem offenen als auch in einem geschlossenen System vorgesehen sein.

Bei der Führung der Luft oder allgemein des Kühlmittels kann es sich um ein offenes System handeln, das beispielsweise mit einem Lüfter am Kühlmitteleingang und einem Lüftungsgitter am Kühlmittelausgang ausgestattet ist. In anderen Ausgestaltungen kann es sich um ein geschlossenes Gesamtsystem handeln, das beispielsweise mit einem Wärmetauscher arbeitet.

Die in bevorzugten Ausführungsformen vorgesehenen Gasdurchtrittsöffnungen des Batteriespeichersystems können auch unabhängig von einer Kühlmittelführung im Prinzip ausschließlich für die Bereitstellung eines Pfades für Brandgase beziehungsweise Rauchgase dienen. Bei einem solchen System kann beispielsweise auf einen Lüfter oder andere Antriebe für die Kühlluft oder ein anderes Kühlmittel verzichtet werden. Allein durch die Gasdurchtrittsöffnungen, die einen Gasaustausch zwischen den benachbarten Batteriemodulen ermöglichen, wird ein ausreichender Temperaturausgleich bewerkstelligt, der insbesondere auch im Fehlerfall bei eventuell auftretenden Brandgasen einen Raum zur Expansion bietet und so vermeidet, dass heiße Brandgase nach außen abgegeben werden.

In einer besonders bevorzugten Ausgestaltung des erfindungsgemäßen Batteriespeichersystems ist das folgende zusätzliche Merkmal vorgesehen:
a. Das Batteriespeichersystem weist mindestens einen Feuchtigkeits- und/oder Überflutungssensor auf.

Ein Feuchtigkeits- und/oder Überflutungssensor ermöglicht es, dass das System im Fehlerfall rechtzeitig abgeschaltet werden kann, beispielsweise wenn Wasser durch ein Lüftungsgitter in das System eindringt. Insofern ist eine Feuchtigkeits- und/oder Überflutungssensor aus sicherheitstechnischen Gründen sehr vorteilhaft.

Das beschriebene Batteriespeichersystem bietet nicht nur besondere Vorteile im Hinblick auf einen definierten Pfad für ein Kühlmittel und insbesondere für Kühlluft, sondern bietet vor allem auch besondere Vorteile im Hinblick auf einen Brandschutz beziehungsweise Feuerschutz. Heiße Rauchgase, die in einem Fehlerfall entstehen können, können dem Gaspfad durch die Gasdurchtrittsöffnungen folgen, wenn sie nicht anderweitig entweichen können. Gegebenenfalls entstehende Rauchgase können dabei definiert durch das System und zu dem einen oder gegebenenfalls mehreren Auffangmitteln geleitet werden.

Insgesamt bietet das erfindungsgemäße Batteriespeichersystem in der bevorzugten Ausführungsform mit Gasdurchtrittsöffnungen die Möglichkeit einer Luftkühlung beziehungsweise einer Frischluftkühlung bei Systemen, die einer hohen IP-Schutzklasse genügen müssen. Die Luftkühlung ist dabei wesentlich günstiger als eine technisch aufwändig Flüssigkeitskühlung. Insbesondere ist nicht zwingend ein Wärmetauscher erforderlich. Zudem realisiert das erfindungsgemäße Batteriespeichersystem erhebliche Vorteile im Hinblick auf eine Brandschutzsicherung, indem eine Rauchgasführung und ein Rauchgasmanagement durch die erfindungsgemäß vorgesehenen Auffangmittel in besonders vorteilhafter Weise in das System in der beschriebenen Weise integriert werden können. Ein weiterer besonderer Vorteil des erfindungsgemäßen Batteriespeichersystems ist, dass eine kostengünstige Kühlung, insbesondere die besonders günstige Luftkühlung, sowohl im offenen wie auch im geschlossenen System möglich ist. Beide Systemkonfigurationen lassen sich im Prinzip mit dem gleichen Batteriemodul realisieren. Dabei ist eine Kühlluftführung auch in hermetisch geschlossenen Systemen möglich, wobei gleichzeitig eine Verbesserung des Feuerschutzes beziehungsweise des Brandschutzes erreicht wird.

Schließlich erlaubt das beschriebene Batteriespeichersystem eine besonders einfache Montage der einzelnen Batteriemodule. Da die bevorzugt vorgesehenen Gasdurchtrittsöffnungen einen unmittelbaren Gasaustausch zwischen den einzelnen Batteriemodulen ermöglichen, ist kein zusätzlicher Montage- und Materialaufwand zur Führung der Kühlluft erforderlich.

Im Zusammenspiel dieser verschiedenen bevorzugten Maßnahmen mit den erfindungsgemäß vorgesehenen Auffangmitteln in dem Batteriespeichersystem, wobei das System sowohl Mittel zur Ableitung von Rauchgasen als gegebenenfalls auch zur Kühlung aufweist, wird ein hoher Brandschutz gewährleistet.

Insbesondere durch ein Zusammenspiel der Auffangmittel mit Kühlmaterialdepots und mit Überdruckventilen mit integriertem Metallgitter können im Vergleich mit herkömmlichen Batteriesystemen erheblich größere Rauchgasmengen gekühlt und aufgefangen werden, ohne dass es zu weitergehenden Schäden am oder durch das Batteriespeichersystem kommt.

In einem herkömmlichen hermetisch dichten Batteriemodul, das über keine Vorrichtungen zum Gasaustausch verfügt, kann bereits eine einzige Energiespeicherzelle beim "Abblasen" so viel Druck im Gehäuse aufbauen, dass unter Umständen die Dichtigkeit des Batteriemoduls nicht mehr gegeben ist. In der Folge können Rauchgase austreten und im Extremfall kann das Batteriemodul sogar bersten. Durch die beschriebenen Maßnahmen steht durch die Möglichkeit des Gasaustausches zwischen benachbarten Batteriemodulen ein Vielfaches an Raum für die Expansion von Rauchgasen zur Verfügung, so dass der gegebenenfalls auftretende Druckaufbau bei dem System deutlich vermindert wird. Das beschriebene System stellt daher ein erheblich höheres Maß an Sicherheit im Hinblick auf die Wahrscheinlichkeit des Berstens eines Batteriemoduls und/oder im Hinblick auf den Austritt von Rauchgasen dar.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Figuren zeigen:
- Fig. 1: prinzipieller Aufbau eines Batteriespeichersystems mit Bodenteil und Deckelteil;
- Fig. 2: Vorderseite (Teilfigur A) eines Batteriemoduls und Rückseite (Teilfigur B) eines Batteriemoduls, jeweils mit einer Kontaktiereinrichtung in einer bevorzugten Ausführungsform;
- Fig. 3: Batteriespeichersystem mit einer senkrechten Luftführung in einem offenen System;
- Fig. 4: separates Batteriemodul mit geschlossenen Kammern zur Realisierung einer umlaufenden Luftführung;
- Fig. 5: Batteriespeichersystem mit einer umlaufenden Luftführung in einem offenen System;
- Fig. 6: Batteriespeichersystem mit einer Hin- und Rückführung des Kühlmittels in einem geschlossenen System;
- Fig. 7: Batteriespeichersystem mit Kühlmaterialdepot und einer umlaufenden Luftführung in einem geschlossenen System und Rauchgasmanagement;
- Fig. 8: Batteriemodul mit integrierten Kühlmaterialdepots;
- Fig. 9: Standalone-Batteriemodul mit Kühlmaterialdepot;
- Fig. 10: erfindungsgemäßes Batteriespeichersystem mit Auffangmittel zum Auffangen von Rauchgasen und mit Kühlmaterialdepot (Normalbetrieb - Teilfigur A, Fehlerfall - Teilfigur B);
- Fig. 11: schematische Darstellung des Gehäuses eines erfindungsgemäßen Batteriemoduls mit einem außen angeordneten Auffangmittel (Ausgangszustand - Teilfigur A; Beginn der Entfaltung des Auffangmittels - Teilfigur B, entfaltetes Auffangmittel - Teilfigur C); und
- Fig. 12: schematische Querschnittsdarstellung durch ein Ventil für eine kombinierte reguläre Gehäuseentlüftung und eine Notentgasung eines Batteriemoduls mit Auffangmittel gemäß der Erfindung.

### DETAILLIERTE BESCHREIBUNG DER AUSFÜHRUNGSBEISPIELE

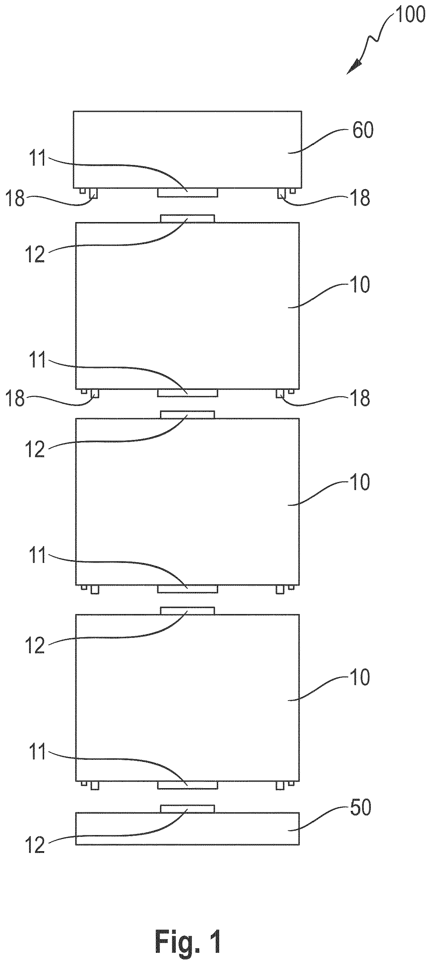

**Fig. 1** zeigt den prinzipiellen Aufbau eines Batteriespeichersystems 100, das von drei gestapelten Batteriemodulen 10 und einem Bodenteil 50 und einem Deckelteil 60 gebildet ist. In dieser Darstellung sind die Batteriemodule 10 im noch nicht zusammengefügten Zustand abgebildet.

Alternativ zu der hier angedeuteten Stapelung der Batteriemodule 10 ist beispielsweise auch eine Nebeneinanderreihung der Batteriemodule möglich.

Die erfindungsgemäß in einem Batteriespeichersystem vorgesehenen Auffangmittel sind in Fig. 1 nicht dargestellt. Die Auffangmittel werden nachfolgend anhand der 10 näher illustriert.

Die in Fig. 1 beispielhaft gezeigten drei Batteriemodule 10 sind auf ihren jeweils einander gegenüberliegenden Seiten ihrer quaderförmigen Gehäuse jeweils mit einer Kontaktiereinrichtung 11 beziehungsweise 12 ausgestattet. Auch das Bodenteil 50 weist eine Kontaktiereinrichtung 12 und das Deckelteil 60 eine Kontaktiereinrichtung 11 auf. Die Kontaktiereinrichtungen 11, 12 sind als Steckverbinder ausgebildet.

Die Kontaktiereinrichtungen 11, 12 sind jeweils von einer umlaufenden mechanischen Führung (Rahmen) umgeben, die die im Inneren der Kontaktiereinrichtungen vorgesehenen, hier nicht näher dargestellten Kontakte beziehungsweise Steckelemente schützt. Darüber hinaus sind die Kontaktiereinrichtungen 11 und 12 jeweils so ausgestaltet, dass sie ineinandergesteckt werden können. In diesem Ausführungsbeispiel sind zu diesem Zweck die Kontaktiereinrichtungen 12 beziehungsweise deren umlaufende mechanische Führungen etwas kleiner ausgebildet als bei den Kontaktiereinrichtungen 11.

Die Anschlüsse für diesen Batteriemodulstapel werden üblicherweise am oberen Deckelteil 60 zugänglich gemacht, während das Bodenteil 50 nur Verbindungstechnik enthält. Prinzipiell ist die Wahl der Stelle der Anschlüsse für Leistung und Datensignale jedoch frei wählbar und ist beispielsweise auch im Bodenteil 50 möglich.

Auf der unteren Seite der Batteriemodule 10 und des Deckelteils 60 sind jeweils Abstandshalter und/oder mechanische Verbindungselemente 18 vorgesehen, die eine Stapelung und Montage der Batteriemodule 10 erleichtern.

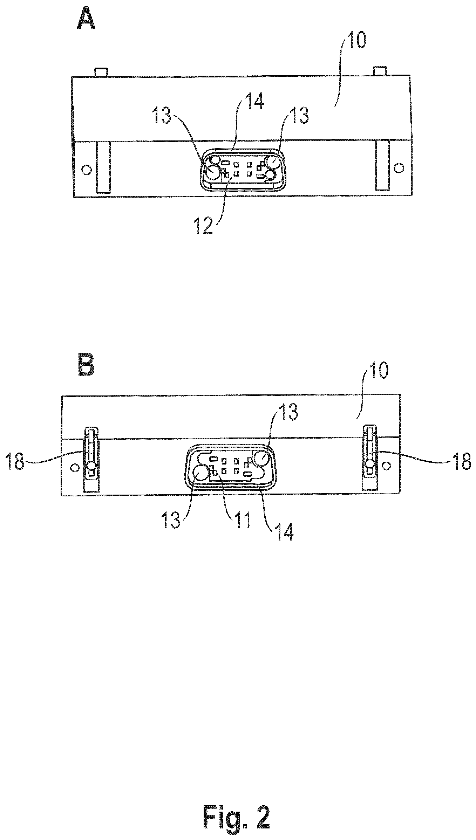

**Fig. 2** zeigt weitere Details der Kontaktiereinrichtungen 11, 12 der Batteriemodule 10. Die Kontaktiereinrichtungen 11, 12 sind jeweils gemäß einer bevorzugten Ausgestaltung der Batteriemodule mit Luftdurchtrittsöffnungen 13 ausgestattet. Die Luftdurchtrittsöffnungen 13 werden dabei von Durchbrechungen in der Gehäusewandung des jeweiligen Batteriemoduls 10 gebildet. Die Gasdurchtrittsöffnungen 13 befinden sich innerhalb der umlaufenden mechanischen Führung 14 (Rahmen) der jeweiligen Kontaktiereinrichtung 11, 12. Im Übrigen befinden sich innerhalb der umlaufenden mechanischen Führung 14 jeweils die an sich bekannten Anschlüsse (Steckelemente) für Leistung und/oder Datensignale, über die die einzelnen Batteriemodule 10 miteinander verschaltet werden. Teilfigur A zeigt die Vorderseite oder Oberseite eines Batteriemoduls 10 und Teilfigur B zeigt die Rückseite oder Unterseite eines Batteriemoduls 10.

Die Kontaktiereinrichtungen 12 und 11 sind so gestaltet, dass sie als zueinander komplementäre Steckverbinder ausgebildet sind. Beispielsweise ist die Kontaktiereinrichtung 12 auf der Vorderseite oder Oberseite weiblich und die Kontaktiereinrichtung 11 auf der Rückseite oder Unterseite des Batteriemoduls männlich oder entsprechend andersherum ausgebildet.

Die umlaufende mechanische Führung 14 (Rahmen) ist stabil ausgebildet und dient in erster Linie dem Schutz vor mechanischen Beschädigungen an den Kontaktiereinrichtungen beziehungsweise den Steckelementen selbst. Die Führungen 14 sind so dimensioniert, dass sie ineinandergeschoben werden können, wenn die passenden Kontaktiereinrichtungen 12 und 11 miteinander verbunden werden. Neben dem mechanischen Schutz erfüllen die Führungen 14 damit auch eine Gewährleistung dafür, dass ein falsches Stecken vermieden wird. Vorzugsweise sind die mechanischen Führungen 14 mit einer Dichtung, zum Beispiel einer Gummi-Dichtlippe oder Ähnlichem, versehen, um die Dichtigkeit gegenüber Gas, Feuchtigkeit, Staub usw. zu gewährleisten.

Die Gasdurchtrittsöffnungen 13 sind in diesem Ausführungsbeispiel kreisrund ausgebildet und befinden sich an zwei einander gegenüberliegenden Ecken der jeweiligen Kontaktiereinrichtung 11, 12. Beim Zusammenfügen der Kontaktiereinrichtungen 11 und 12 liegen die Gasdurchtrittsöffnungen 13 der beiden Kontaktiereinrichtungen 11 und 12 nicht unmittelbar übereinander, dennoch kann hierdurch ein ausreichender Gasfluss sichergestellt werden. In anderen Ausführungsformen kann es vorgesehen sein, dass die Gasdurchtrittsöffnungen nach der Zusammenfügung der Kontaktiereinrichtungen unmittelbar einander gegenüber liegen, wobei der Strömungswiderstand gegebenenfalls reduziert werden kann.

Über die Gasdurchtrittsöffnungen 13 wird ein direkter Gasaustausch und insbesondere eine Führung von Kühlluft zwischen den einzelnen Batteriemodulen 10 möglich, ohne dass weitere Maßnahmen zur Führung der Kühlluft zwischen den Batteriemodulen, beispielsweise Schläuche oder Ähnliches, erforderlich wären. Darüber hinaus können die Gasdurchtrittsöffnungen 13 mit besonderem Vorteil für ein Rauchgasmanagement genutzt werden.

Um den Strömungswiderstand für das durchgeleitete Kühlmedium, beispielsweise die Kühlluft, und/oder für die Rauchgase zu verringern, können in anderen Ausführungsbeispielen die umlaufenden mechanischen Führungen 14 und die hiervon umschlossenen Gasdurchtrittsöffnungen 13 gegenüber diesem Ausführungsbeispiel erweitert und vergrößert werden. Die mechanischen Führungen 14 können dabei maximal den gesamten Querschnitt der jeweiligen Seite des Batteriemoduls 10 umfassen, so dass für den Kühlmitteldurchtritt ausreichend viel Fläche beziehungsweise Querschnitt dargestellt werden kann. Es kann auch eine Vielzahl von Öffnungen, gegebenenfalls in verschiedenen Formen, vorgesehen sein, je nach Strömungs- und gegebenenfalls Kühl- und Brandschutzverhalten.

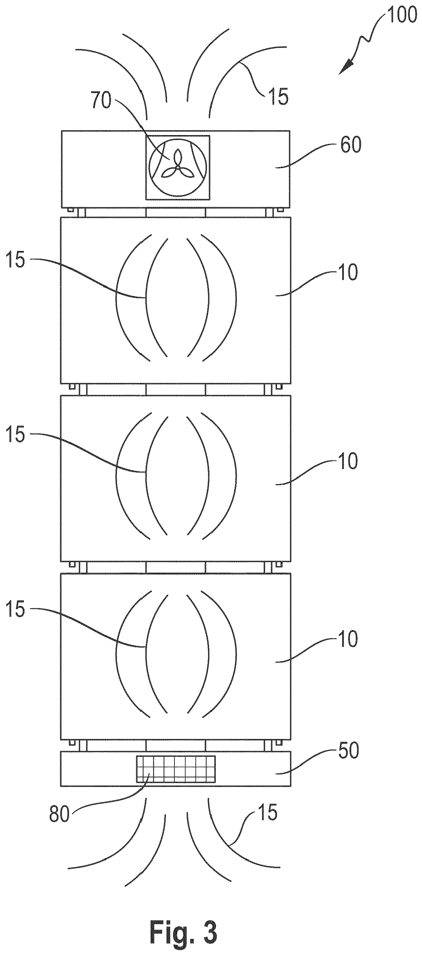

**Fig. 3** illustriert ein Beispiel eines Batteriespeichersystems, bei dem eine senkrechte Kühlluftführung mit einer Luftströmung entweder nach oben oder nach unten durch den Stapel der Batteriemodule 10 realisiert ist. Mit dem Bezugszeichen 15 sind die Luftströmungen bezeichnet. In diesem Ausführungsbeispiel ist im Deckelteil 60 ein Ventilator 70 und im Bodenteil 50 ein Lüftungsgitter 80 vorgesehen. Die Luftströmungsrichtung kann während des Betriebs zeitweise umgekehrt werden, um im zeitlichen Mittel die thermische Belastung der Energiespeicherzellen innerhalb der Batteriemodule 10 zu egalisieren.

In anderen Ausführungsbeispielen kann/können der oder die Lüfter oder Ventilatoren auch im unteren Bereich des Systems, insbesondere im Bodenteil, oder innerhalb des Stapels in einem oder mehreren Batteriemodulen oder auch außerhalb des Systems vorgesehen sein. Darüber hinaus sind Anschlüsse für eine externe Kühlluftquelle, wie beispielsweise Frischluftzufuhr aus der Umwelt, oder ein Anschluss an eine Klimaanlage beziehungsweise Kältemaschine möglich.

Alternativ oder zusätzlich zu einem Lüfter kann/können zusätzlich aktive Kühleinrichtungen vorgesehen sein, wie beispielsweise Peltier-, Absorber- oder Kompressorkühler. Darüber hinaus können innerhalb jedes Batteriemoduls interne Strukturen zur Luftführung beziehungsweise zur Luftleitung oder allgemein zur Kühlmittelführung oder -leitung vorgesehen sein. Durch den bevorzugten Einsatz eines Feuchtigkeits- und/oder Überflutungssensors kann das System im Fehlerfall abgeschaltet werden, beispielsweise wenn Wasser durch das untere Lüftungsgitter 80 eindringt.

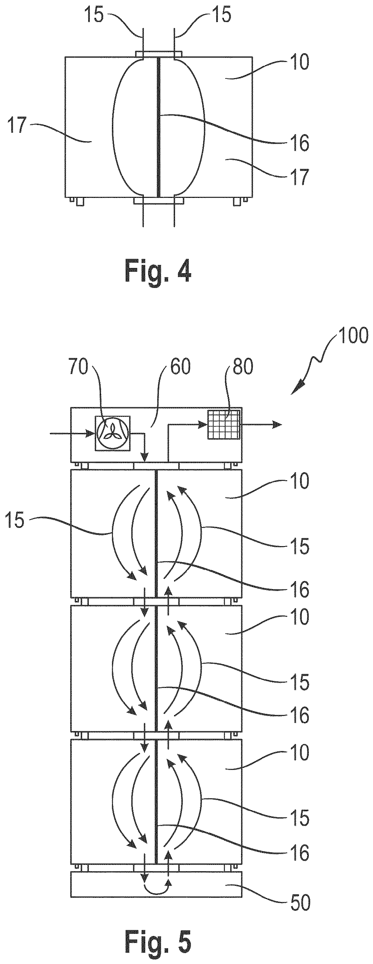

**Fig. 4** illustriert ein einzelnes Batteriemodul 10, das durch eine Unterteilung 16 im Inneren des Batteriemoduls gekennzeichnet ist, so dass in diesem Ausführungsbeispiel zwei Abteilungen beziehungsweise separate Kammern 17 innerhalb des Batteriemoduls gebildet werden. Die Kammern 17 erlauben eine umlaufende Luftführung, wie sie anhand des Batteriespeichersystems 100 in **Fig. 5** illustriert ist. Hierbei bezeichnen die Bezugszeichen 15 wiederum die Luftströmungsrichtung. Der Lufteinlass und der Luftauslass sind in diesem Ausführungsbeispiel in dem Deckelteil 60 des Batteriespeichersystems vorgesehen, können aber auch anderer Stelle, beispielsweise im Bodenteil 50, oder an anderer Stelle innerhalb des Stapels der Batteriemodule 10 realisiert werden. Der Luftstrom wird durch einen Lüfter oder Ventilator 70 im Deckelteil 60 angetrieben und über ein Lüftungsgitter 80, ebenfalls im Deckelteil 60, nach dem Durchlaufen der Batteriemodule 10 und des Bodenteils 50 aus dem Batteriespeichersystem ausgeleitet.

Um einen hohen Temperaturgradienten entlang des Luftpfades zu vermeiden, kann die Luftgeschwindigkeit entsprechend hoch gewählt werden. Zusätzlich oder stattdessen kann auch eine zyklische Umkehrung der Strömungsrichtung erfolgen, um die thermische Belastung der Energiespeicherzellen zu egalisieren.

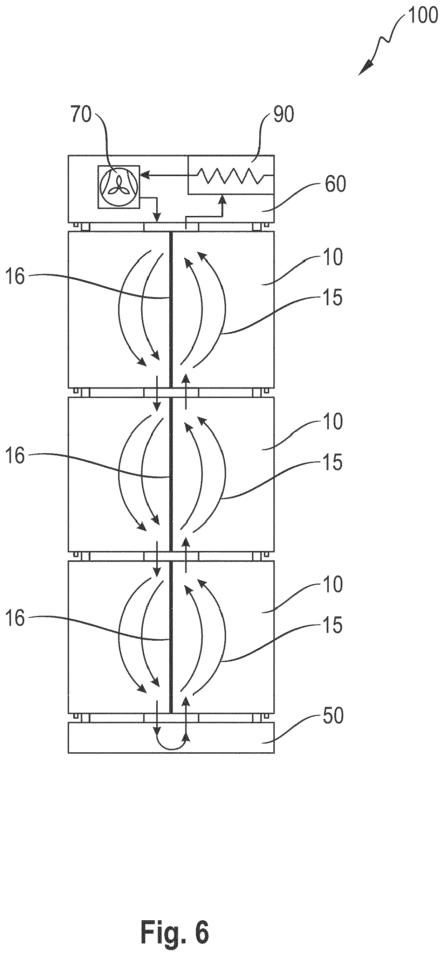

**Fig. 6** illustriert ein weitere Ausführungsform eines Batteriespeichersystem 100 mit mehreren gestapelten Batteriemodulen 10 sowie einem Bodenteil 50 und einem Deckelteil 60. Vergleichbar mit der Ausgestaltung des Batteriesystems in Fig. 5 sind auch hier Unterteilungen 16 zur Unterteilung der Batteriemodule 10 in separate Kammern vorgesehen. Dies ermöglicht eine umlaufende Luftführung in diesem geschlossenen System, wobei durch eine Hin- und Rückführung des Kühlmittels innerhalb der Batteriemodule eine besonders gute Kühlung möglich ist. Durch die bevorzugt vorgesehenen Gasdurchtrittsöffnungen, die einen Luftaustausch beziehungsweise Kühlmittelaustausch zwischen den einzelnen Batteriemodulen 10 und dem Deckelteil 60 und dem Bodenteil 50 ermöglichen, sind keine weiteren Kanäle, Rohre oder Schläuche für das Schließen des Kühlmittelkreislaufs erforderlich. Auch hier kann die Lüftungsrichtung zyklisch gewechselt werden, um die Temperaturverteilung zu egalisieren.

Weiterhin kann in dieser Ausgestaltung und auch in den anderen erläuterten Ausgestaltungen jedes Batteriemodul 10 eine oder mehrere wärmeleitenden Maßnahmen/Komponenten beinhalten, die die separaten Kammern thermisch koppeln, beispielsweise eine wärmeleitende Grundplatte oder ein entsprechend als Wärmeüberträger wirkende Gehäusewand.

In dieser Ausgestaltung ist neben dem Lüfter oder Ventilator 70 ein dedizierter Wärmetauscher 90 im Deckelteil 60 vorgesehen, der zur Entwärmung der umgewälzten Kühlluft dient. Prinzipiell kann das System jedoch auch ohne einen solchen Wärmetauscher arbeiten. Sofern die Oberfläche des Batteriespeichersystems 100 als Kühlkörper dienen soll, kann dieses geschlossene System Hotspots kühlen und Wärme abgeben helfen. Die äußere Oberfläche des Systems dient in diesem Fall als Kühlkörper, der die Wärme der innen umgewälzten Luft passiv an die Umgebung abgeben kann. Bei aktiver Umwälzung der Luft im Inneren des Systems sorgt die ständige Luftbewegung dafür, dass Stellen mit besonders hoher Wärmeleistung pro Fläche (*hot spots*) entwärmt werden und die Temperaturen bis zu einem gewissen Maß egalisiert werden.

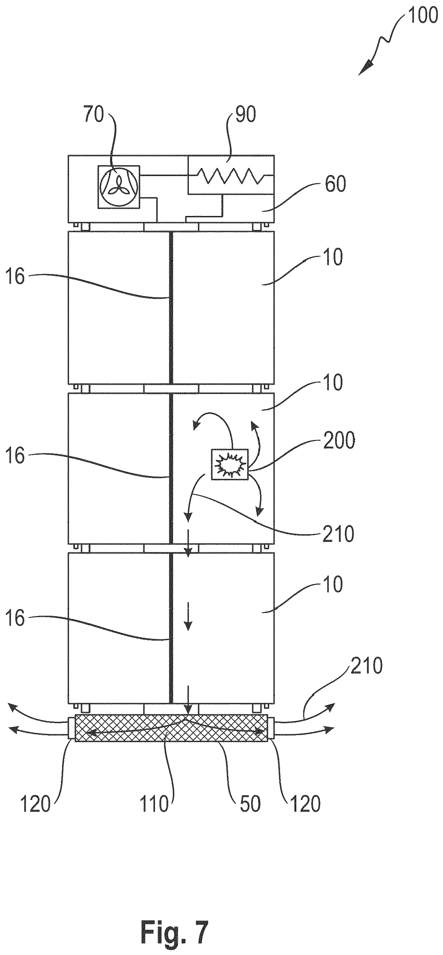

**Fig. 7** zeigt ein Batteriespeichersystem 100, wobei im Bodenteil 50 ein Kühlmaterialdepot 110 angeordnet ist. Das Kühlmaterialdepot 110 kann dabei in Form eine Abkühlkammer ausgestaltet sein. Darüber hinaus sind im Bereich des Bodenteils 50 zwei Überdruckventile oder Berstmembranen 120 vorgesehen. Wenn in diesem Ausführungsbeispiel die Energiespeicherzelle 200, die sich im mittleren Batteriemodul 10 befindet, thermisch auffällig werden und ausgasen und gegebenenfalls sogar in Brand geraten würde, so würden die entstehenden Rauchgase 210 dem Pfad folgen, der den geringsten Widerstand bietet. Der Verlauf der Rauchgase 210 ist hier durch Pfeile angedeutet. Dabei können die volumenfordernden Rauchgase 210 sich auf mehrere Batteriemodule 10 verteilen, wodurch einem gefährlichen Druckanstieg entgegengewirkt wird. Für den Fall, dass der Druckanstieg trotz des erhöhten Volumens nicht mehr abgefangen werden kann, sorgt das Kühlmaterialdepot 110 im Bodenteil 50 in Kombination mit den Überdruckventilen oder Berstmembranen 120 dafür, dass sich der Überdruck in kontrollierter Weise abbauen kann. Durch die so realisierte Abkühlung der Rauchgase 210 wird die Brandgefahr erheblich verringert.

Die Überdruckventile oder Berstmembranen 120 sind vorteilhafterweise so angebracht, dass eventuell austretende Rauchgase 210 gezielt in weniger kritische Bereiche, beispielsweise Boden, Wand oder Ähnliches, geleitet werden. Auch ist es möglich, Rauchgase gezielt durch ein Rohr oder einen Schlauch ins Freie zu leiten. Besonders vorteilhaft ist dabei, dass prinzipiell eine einzige Berstmembran, die verhältnismäßig kostenaufwendig ist, für das Gesamtsystem ausreichen kann. Eine solche Berstmembran für das Gesamtsystem kann beispielsweise für einen Berstdruck in einem Bereich zwischen 25 und 1500 mbar ausgelegt werden. Insbesondere ist es in der Regel nicht erforderlich, dass jedes einzelne Batteriemodul 10 mit einer Berstmembran oder einer anderweitigen Überdrucksicherung ausgestattet ist.

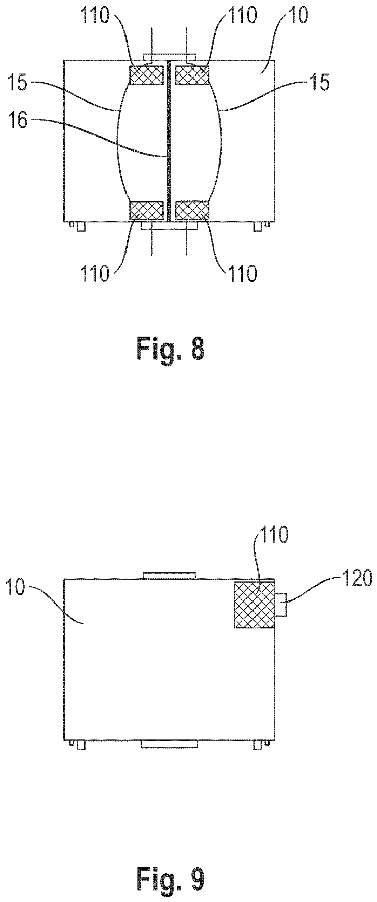

**Fig. 8** zeigt eine Ausführungsform eines Batteriemoduls 10, bei dem innerhalb des Batteriemoduls 10 mehrere Kühlmaterialdepots 110 vorgesehen sind, die im Bereich der Gasdurchtrittsöffnungen 13 (hier nicht näher dargestellt) angeordnet sind. Durch diese Maßnahme kann ebenfalls ein sehr wirksamer Schutz vor den Auswirkungen des Ausgasens einer oder weniger Energiespeicherzellen innerhalb des Batteriemoduls 10 bewirkt werden. Weiterhin ist es möglich, dass durchtretende Rauchgase durch eine Vielzahl kleiner Lüftungsöffnungen, die die Gasdurchtrittsöffnungen bilden, bereits so stark abgekühlt werden, dass ein löschender Effekt für gegebenenfalls auftretende Flammen eintritt. Die Gasdurchtrittsöffnungen können in diesem Fall auch vorteilhafterweise als Schlitze realisiert sein. Besonders vorteilhaft sind kombinierte Maßnahmen mit Kühlmaterialdepots und Lüftungsgittern beziehungsweise mit einer Matrix aus vielen kleinen Lüftungsöffnungen.

**Fig. 9** zeigt ein hermetisch dichtes *Standalone*-Batteriemodul 10, das allein durch das vorgesehene Kühlmaterialdepot 110, das sich im Bereich eines Überdruckventils oder einer Berstmembran 120 befindet, einen sehr wirksamen Brandschutz realisiert.

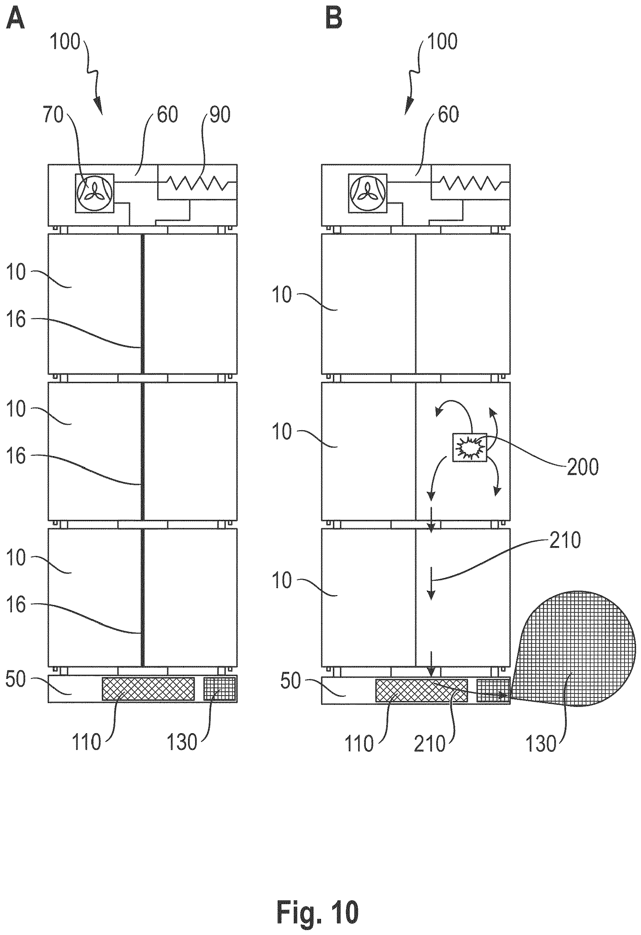

**Fig. 10** zeigt eine besonders vorteilhafte Ausgestaltung eines erfindungsgemäßen Batteriespeichersystems 100, die vergleichbar mit den vorab erläuterten Beispielen von Batteriesystemen eine umlaufende Kühlluftführung in einem geschlossenen System realisiert. Zusätzlich zu dem Kühlmaterialdepot 110 im Bodenteil 50 ist hier als erfindungsgemäße Brandschutzmaßnahme ein Auffangmittel 130 in Form eines faltbaren Beutels vorgesehen, der im Bodenteil 50 des Systems angeordnet ist. Teilfigur 10A zeigt den Normalbetrieb. Teilfigur 10B zeigt den Fehlerfall, bei dem es zu einer Entwicklung von Rauchgas 210 durch die thermisch auffällige Energiespeicherzelle 200 kommt.

Der faltbare Beutel 130 befindet sich im Normalfall im zusammengefalteten Zustand im System und entfaltet sich erst, wenn ein entsprechend hoher Druck insbesondere durch das Abblasen von einer oder mehreren Energiespeicherzellen innerhalb der Batteriemodule 10 des Systems auftritt. Der Weg der Rauchgase 210 ist durch Pfeile dargestellt.

Das Kühlmaterialdepot 110 im Bodenteil sorgt zunächst für eine Abkühlung der Rauchgase 210, bevor die Rauchgase 210 in den faltbaren Beutel 130 eintreten. Wenn im Fehlerfall tatsächlich Rauchgase 210 auftreten und in den Beutel beziehungsweise das Auffangmittel 130 gelangen, wird der Beutel 130 aus dem Gehäuse beziehungsweise in diesem Fall aus dem Bodenteil 50 des Batteriespeichersystems 100 herausgedrückt und durch die Rauchgase 210 aufgeblasen. In besonders bevorzugter Weise ist der faltbare Beutel 130 aus einem hitzebeständigen Material gefertigt ist, so dass er nicht selbst Feuer fangen kann.

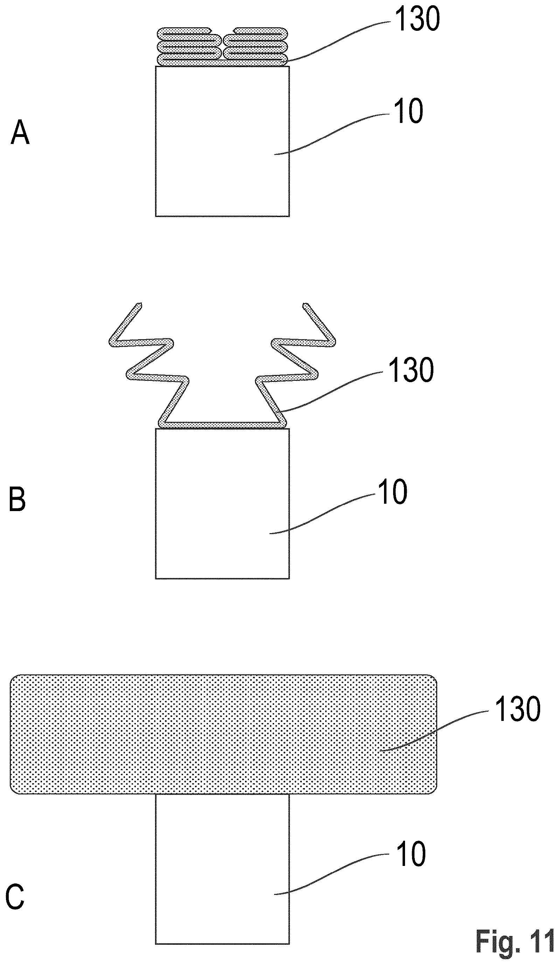

**Fig. 11** deutet in schematischer Weise das Gehäuse eines Batteriemoduls 10 an, das auf der Oberseite mit einem Auffangmittel 130 gemäß der Erfindung ausgestattet ist. Teilfigur 11A zeigt den Ausgangszustand beziehungsweise den Zustand im Normalbetrieb, bei dem das in diesem Ausführungsbeispiel schlauchförmige Auffangmittel 130 in platzsparender Weise ziehharmonikaartig zusammengefaltet ist. Teilfigur 11B illustriert den beginnenden Fehlerfall, in welchem es zur Freisetzung von heißen Gasen durch eines oder gegebenenfalls mehrere thermisch entgleisende Energiespeicherelemente im Inneren des Batteriemoduls 10 kommt. Die freigesetzten heißen Gase (Rauchgase) werden in das Auffangmittel 130 eingeleitet, was zu einer Entfaltung und einem Aufblasen des Auffangmittels 130 führt. Teilfigur 11C illustriert das vollständig entfaltete und aufgeblasene Auffangmittel 130.

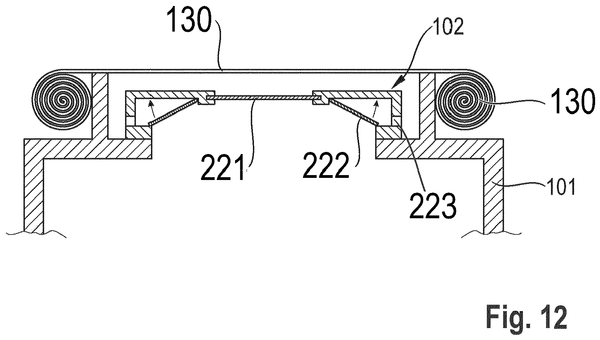

**Fig. 12** zeigt ein Ventil 220 für beispielsweise ein Batteriemodul oder ein Batteriespeichersystem, das zum einen als Überdruckventil für eine schnelle Entgasung im Fehlerfall und zum anderen als Druckausgleichselement für eine reguläre Gehäuseentlüftung dient. Darüber hinaus ist das Ventil 220 erfindungsgemäß mit einem Auffangmittel 130 ausgestattet. Das beutelförmige Auffangmittel 130 liegt über der Öffnungsseite des Ventils 220 und ist im hier gezeigten Ausgangszustand an beiden Seiten in platzsparender Weise aufgerollt. Die zentrale Öffnung des Ventils 220 ist mit einem wasserabweisenden Element 221, beispielsweise einem Vliesstoff-Element, bedeckt. Das Element 221 erlaubt einen Luftaustausch für einen permanenten Druckausgleich und verhindert gleichzeitig das Eindringen von Wasser durch die wasserabweisenden Eigenschaften des Elements 221. Weiterhin ist ein Schirmventil 222 vorgesehen, welches bei einem Überdruck im Inneren des hier nicht näher gezeigten Gehäuses in Pfeilrichtung nach oben klappt und dabei eine ringförmige Entgasungsöffnung 223 freigibt, über die eine schnelle Entgasung in einem solchen Fehlerfall erfolgt. Auch das wasserabweisenden Element 221 wird bei einem ansteigenden Druck bersten und eine zentrale Entgasungsöffnung freigeben, die zuvor mit dem wasserabweisenden Element bedeckt war. Oberhalb dieser Öffnungen befindet sich das Auffangmittel 130. Die freigesetzten Gase werden durch einen hier nicht näher dargestellten Einlass in das Auffangmittel 130 geleitet und führen zu einer Entfaltung und einem Aufblasen des Auffangmittels 130. Die freigesetzten heißen Gase werden damit in dem Auffangmittel 130 aufgefangen und zurückgehalten, wodurch eine Brandgefahr erheblich reduziert und eine schnelle Freisetzung der potentiell toxischen Gase in die Umgebung vermieden wird.

## Patentansprüche

1. Elektrochemisches Energiespeicherelement, Batteriemodul (10) mit einem Gehäuse und einer Mehrzahl von elektrochemischen Energiespeicherzellen, die im Inneren des Gehäuses angeordnet sind, oder Batteriespeichersystem (100) mit mindestens zwei Batteriemodulen (10), **dadurch gekennzeichnet, dass**
a. das elektrochemische Energiespeicherelement oder das Batteriemodul (10) oder das Batteriespeichersystem (100) mindestens ein Auffangmittel (130) für entweichende Rauchgase (210) umfasst.

2. Elektrochemisches Energiespeicherelement, Batteriemodul oder Batteriespeichersystem nach Anspruch 1 mit dem folgenden zusätzlichen Merkmal:
a. Das Auffangmittel (130) ist ein entfaltbarer Beutel.

3. Elektrochemisches Energiespeicherelement, Batteriemodul oder Batteriespeichersystem nach Anspruch 1 oder Anspruch 2 mit dem folgenden zusätzlichen Merkmal:
a. Das Auffangmittel (130) ist aus hitzebeständigem Material gebildet.

4. Elektrochemisches Energiespeicherelement, Batteriemodul oder Batteriespeichersystem nach einem der vorhergehenden Ansprüche mit dem folgenden zusätzlichen Merkmal:
a. Das Auffangmittel (130) ist in einem zusammengefalteten Zustand in ein Gehäuse des Energiespeicherelements oder in das Gehäuse des Batteriemoduls (10) oder in ein Gehäuse des Batteriespeichersystems (100) integriert.

5. Elektrochemisches Energiespeicherelement, Batteriemodul oder Batteriespeichersystem nach einem der vorhergehenden Ansprüche mit dem folgenden zusätzlichen Merkmal:
a. Das Auffangmittel (130) ist mit einem Überdrucksicherung und/oder einem Druckausgleichselement (220) kombiniert.

6. Elektrochemisches Energiespeicherelement, Batteriemodul oder Batteriespeichersystem nach einem der vorhergehenden Ansprüche mit dem folgenden zusätzlichen Merkmal:
a. das Energiespeicherelement oder Batteriemodul oder Batteriespeichersystem umfasst mindestens ein Kühlmaterialdepot (110) mit einem oder mehreren Kühlmaterialien.

7. Elektrochemisches Energiespeicherelement, Batteriemodul oder Batteriespeichersystem nach Anspruch 6 mit mindestens einem der folgenden zusätzlichen Merkmale:
a. Das Kühlmaterial des Kühlmaterialdepots (110) ist Stahlwolle;
b. Das Kühlmaterial des Kühlmaterialdepots (110) ist Aluminiumwolle;
c. Das Kühlmaterial des Kühlmaterialdepots (110) ist Steinwolle;
d. Das Kühlmaterial des Kühlmaterialdepots (110) ist Quarzschaumgranulat;
e. Das Kühlmaterial des Kühlmaterialdepots (110) ist ein offenporiger Metallschaum;
f. Das Kühlmaterial des Kühlmaterialdepots (110) ist ein Aluminiumkühlkörper.

8. Batteriespeichersystem nach einem der vorhergehenden Ansprüche mit den folgenden zusätzlichen Merkmalen:
a. das Batteriespeichersystem umfasst weiterhin gegebenenfalls ein Bodenteil (50) und/oder ein Deckelteil (60),
b. benachbarte Batteriemodule (10) innerhalb des Batteriespeichersystems sind über Kontaktiereinrichtungen (11, 12) elektrisch miteinander verbunden.

9. Batteriespeichersystem nach Anspruch 8 mit dem folgenden zusätzlichen Merkmal:
a. Mindestens eines der Batteriemodule und/oder das gegebenenfalls vorhandene Bodenteil (50) und/oder das gegebenenfalls vorhandene Deckelteil (60) umfasst mindestens ein Kühlmaterialdepot (110) mit einem oder mehreren Kühlmaterialien umfasst.

10. Batteriespeichersystem nach Anspruch 8 oder Anspruch 9 mit dem folgenden zusätzlichen Merkmal:
a. Die Batteriemodule weisen Gasdurchtrittsöffnungen auf, über die die Batteriemodule in Gasaustauschkontakt miteinander stehen.

11. Batteriespeichersystem nach einem der Ansprüche 8 bis 10 mit dem folgenden zusätzlichen Merkmal:
a. Das Batteriespeichersystem (100) ist mit mindestens einem Zugang für ein Löschmittel ausgestattet.

12. Batteriespeichersystem nach einem der Ansprüche 8 bis 11 mit mindestens einem der folgenden zusätzlichen Merkmale:
a. Die Kontaktiereinrichtungen (11, 12) sind Steckverbinder;
b. die Kontaktiereinrichtungen (11, 12) sind jeweils von einer umlaufenden mechanischen Führung (14) umgeben;
c. im Bereich der Kontaktiereinrichtungen (11, 12) innerhalb der umlaufenden mechanischen Führung (14) ist mindestens eine Gasdurchtrittsöffnung (13) vorgesehen;
d. Innerhalb der mechanischen Führungen (14) der Kontaktiereinrichtungen (11, 12) sind jeweils zwei oder mehr Gasdurchtrittsöffnungen (13) vorgesehen;
e. Innerhalb der mechanischen Führungen (14) der Kontaktiereinrichtungen (11, 12) ist jeweils eine Gitterstruktur als Gasdurchtrittsöffnung (13) vorgesehen.

13. Batteriespeichersystem nach einem der Ansprüche 8 bis 12 mit dem folgenden zusätzlichen Merkmal:
a. Das Batteriespeichersystem (100) weist mindestens einen Feuchtigkeits- und/oder Überflutungssensor auf.

14. Batteriespeichersystem nach einem der Ansprüche 8 bis 13 mit mindestens einem der folgenden zusätzlichen Merkmale:
a. Das Batteriespeichersystem (100) umfasst mindestens ein Überdruckventil (120);
b. Das Batteriespeichersystem (100) umfasst mindestens ein Überdruckventil mit einem integrierten Metallgitter;
c. Das Batteriespeichersystem (100) umfasst mindestens eine Berstmembran (120) als Überdrucksicherung.
